# EUROPEAN PATENT SPECIFICATION

(11) **EP 3 895 959 B1**
(45) Date of publication and mention of the grant of the patent: **05.06.2024**
(21) Application number: 21167596.2
(22) Date of filing: 09.04.2021
(51) Int. Cl.: B62B 1/12, B62B 5/00, B62B 5/06

(54) **TACTICAL TRANSPORT CART FOR MANUAL NAVIGATION OVER BOTH TOPOGRAPHIC AND HYDROGRAPHIC TERRAINS**
TAKTISCHER TRANSPORTWAGEN ZUR MANUELLEN NAVIGATION ÜBER SOWOHL TOPOGRAFISCHES ALS AUCH HYDROGRAFISCHES GELÄNDE
CHARIOT DE TRANSPORT TACTIQUE POUR NAVIGATION MANUELLE SUR DES TERRAINS TOPOGRAPHIQUES ET HYDROGRAPHIQUES

(30) Priority: 14.04.2020 US 202016848447
(43) Date of publication of application: 20.10.2021
(73) Proprietor: Hendrick Motorsports Performance Group, LLC, Charlotte, NC 28262 (US)
(72) Inventor: Carlson, Marshall, Charlotte, NC 28262 (US); Walker, Jordan Lind, Landis, NC 28088 (US); Parker, Richard Alvin, Harrisburg, NC 28075 (US); Flanagan, Rhegan Lee, Cornelius, NC 28031 (US)
(74) Representative: Patentanwälte Ruff, Wilhelm, Beier, Dauster & Partner mbB

(56) References cited:
- EP-A2- 1 031 661
- CN-A- 108 357 536
- US-A1- 2006 207 831
- US-A1- 2016 039 445

## Description

### Cross-reference to Related Application

This is a continuation-in-part application claiming priority from U.S. Patent Application No. 15/616,992, filed on June 8, 2017, in the United States Patent and Trademark Office.

### Field of the Invention

The present invention relates generally to transport devices for moving various articles, including personnel, such as devices commonly referred to as carts, and more particularly, to carts adapted to tactical uses by military, law enforcement, fire, rescue and emergency response organizations for transporting items over diverse terrains, both over land surfaces and water-covered surfaces.

### Background of the Invention

Utility carts of many diverse structures with varied features, capabilities and end-use applications are known. The most basic carts are in the nature of unpowered wheelbarrows, wagons or trailers of a sufficiently small size and weight to be manually pushed or pulled over paved or generally flat or level unpaved surfaces. Some such carts contemplate a structure having active positive buoyancy to float on the surface of bodies of water to allow pushing or pulling motivation through water. Other carts are motorized to supplement manual movement and guidance, but no such carts are known to be operable within or through bodies of water or other water-covered terrain.

The conditions under which military, law enforcement, fire, rescue, and other emergency personnel operate are especially diverse and demanding. They may be called upon to navigate over remote and undeveloped terrains that may be hilly, rocky, and otherwise hazardous, as well as over water-covered areas ranging from creeks, streams, swamplands, ponds, and rivers that are equally or more difficult and hazardous. Such personnel also typically must transport various types of supplies and equipment into and out of such areas, and in some cases to move wounded or injured persons who are incapable of walking or moving under their own power. None of the known carts are suitable to operate under such differing conditions, for the varied tactical uses and purposes, and over the differing possible terrains as persons in these professions must deal with.

Accordingly, a need exists for a tactical cart adapted for manual navigation over both land and water-covered terrains to transport diverse articles.

### Summary of the Invention

Briefly summarized, the present invention provides a tactical transport cart configured to be manually navigable by a single human operator over both ground surfaces of topographic terrains and water-covered surfaces of hydrographic terrains. As used herein, "hydrographic terrains" is meant to fully encompass and include essentially all possible surfaces that are underwater or water-covered through which humans can walk, wade or swim, either above or below the water surface, including natural water-covered surfaces ranging from creek beds, stream beds, river beds, pond and lake beds, ocean floors, flooded areas, to swamps and muddy regions, and water-covered man-made surfaces such as culverts, storm sewers, drains, gutters, ditches, aqueducts, sluiceways, causeways, and spillways. "Topographic terrains" is meant to fully encompass and include essentially all other possible ground surfaces over which humans can ambulate by walking or crawling, including without limitation natural land surfaces ranging from fields, meadows, forests, woods, hills, mountains, rocks, unpaved trails and other above ground surfaces, to caves, caverns, tunnels and other subterranean surfaces, and man-made surfaces ranging from paved roads, paths, and other outdoor man-made surfaces, to structural surfaces such as hallways, breezeways and staircases.

According to the present invention, the transport cart basically comprises a frame, a payload-supporting area on the frame, a pair of terrain-engaging transport propulsion members attached to the frame in laterally spaced relation for supporting the frame at an elevation above surrounding terrain, and a handle structure attached to the frame and extending therefrom in orthogonal relation to the transport propulsion members. At least one motor is connected in driving relation to the transport propulsion members, and a battery is provided to supply motive power to the motor. A control device is operatively connected between the battery and the motor for controlling supply of motive power to the motor. The control device includes a switch device operable from the handle structure for selective actuation and deactuation of the motor. The handle structure is configured for manual grasping by a single human operator for steering movement of the frame over surrounding terrain while enabling simultaneous selective access to and operation of the control device. The frame, transport propulsion members and handle structure are cooperatively dimensioned and configured for movement of the cart over ground surfaces of topographic terrains and for partially and fully submerged movement over underwater and other water-covered surfaces of hydrographic terrains. The motor, the battery, the control device and connections therebetween are sealed to prevent water intrusion during partially or fully submerged operation.

Various embodiments and alternative features are contemplated for the tactical cart of this invention. As used herein, "terrain-engaging transport propulsion members" is meant to fully encompass and include essentially all possible means of supporting and moving the frame and other cart components as a unit across topographic and hydrographic terrains. For example, in contemplated embodiments, a pair of wheels may be rotatably attached, preferably in co-axial relation to each other, to opposite sides of the frame to serve as the transport propulsion members, and in other contemplated embodiments, a pair of track mechanisms may be attached to opposite sides of the frame as the transport propulsion members. The propulsion members may be of the type that are run-flat, bead locked, solid disc, tweel, terrain specific, among others. One or more additional wheels or track mechanisms could also be provided.

In wheeled embodiments, the wheels may include enlarged tires inflated at a relatively low pressure to present a wide footprint in contact with a surface, to optimize contact with terrain surfaces, such as tires commonly known as "all-terrain" and "high flotation" tires. Such tires do not actually impart buoyancy to the extent of a capability of the tires and cart for flotation at the surface of a body of water, but rather provide a profile and sufficient incremental buoyancy that enhances the surface area of contact by the tires to resist miring down in muddy, wet, loose or soft soils.

Differing motor arrangements are also contemplated. For example, in some embodiments, a motor may be mounted to the frame with at least one drive shaft extending outwardly for mounting of the wheels, track mechanisms, or other transport propulsion members. Alternatively, in other embodiments, individual motors may be assembled with the transport propulsion members, such as a so-called hub motor incorporated into a hub portion of each wheel, or a motor incorporated into each track mechanism.

Various configurations of the frame of the present cart are possible. For example, in contemplated embodiments, the frame includes frame members extending in a longitudinal direction and a cart body extending downwardly from the frame members for defining a lower enclosure. In such embodiments, the transport propulsion members may be attached to a lower side of the cart body and a platform may be affixed to the frame at an upper side of the cart body for defining the payload supporting area. The battery may be contained within a sealed battery housing and the motor may be contained within a sealed motor housing, each housed within the enclosure of the cart body. A general use storage compartment may also be provided within the enclosure.

Differing configurations of the handle structure are possible. In contemplated embodiments, the handle structure may comprise a pair of laterally spaced-apart handles attached to rearward ends of the frame members, and may further include means for mounting the handles selectively in multiple positions relative to the frame members. A second pair of laterally spaced-apart handles may be attached to forward ends of the frame members for optional assisted navigation of the cart by a second human operator. The switch device may include a throttle control on the handle structure for modulating operation of the motor.

Differing configurations of payload supports are also possible. For example, open and enclosed cargo boxes of differing sizes and configurations suited to carrying differing items of equipment, supplies, and the like could be mounted to the frame in addition to or instead of a platform. A litter for carrying injured or wounded personnel could be fitted to the frame. Any number of other purpose-built payload supports are also contemplated.

In one particular disclosed embodiment, the tactical transport cart comprises a frame having laterally spaced-apart longitudinally-extending frame members, a cart body extending downwardly from the frame members defining a lower enclosure, and a platform affixed to the frame at an upper side of the cart body defining a payload supporting area thereabove. A motor is contained within the enclosure within a motor housing sealed against water intrusion and having at least one drive shaft with opposite shaft ends extending sealably outwardly through the motor housing and outwardly therefrom to opposite sides of the frame at a lower side of the cart body. A pair of wheels is affixed to the opposite ends of the at least one drive shaft in laterally spaced coaxial relation for supporting the frame substantially entirely above the axis of the wheels, the wheels including all-terrain high-flotation tires. A battery is contained within the enclosure of the cart body within a battery housing sealed against water intrusion. A motor controller is housed within the enclosure of the cart body in sealed operative connection between the battery and the motor for controlling supply of motive power to the motor. A handle structure comprising a pair of laterally spaced-apart handles is attached to rearward ends of the frame members in perpendicular relation to the axis of the wheels. A switch device is mounted on one of the handles and operatively connected sealably to the motor controller for selective remote actuation of the motor, the switch device including a throttle control for modulating operation of the motor. The handle structure is configured for manual grasping of the handles by a single human operator for steering movement of the frame while enabling simultaneous access to and operation of the control device via the switch. The frame, wheels and handle structure are cooperatively dimensioned and configured for rolling movement of the cart over ground surfaces of topographic terrains and for partially and fully submerged rolling movement over underwater and other water-covered surfaces of hydrographic terrains.

### Brief Description of the Drawings

Figure 1 is a perspective view of one contemplated embodiment of tactical transport cart according to the present invention;
Figure 2 is a partially exploded perspective view of the tactical transport cart of Figure 1;
Figure 3 is a top plan view of the tactical transport cart of Figure 1, with the payload platform removed;
Figure 4 is an elevational view of the control switches mounted on the handle structure of the tactical transport cart of Figure 1;
Figure 5 is a perspective view of another contemplated embodiment of tactical transport cart according to the present invention; and
Figure 6 is a perspective view of another contemplated embodiment of tactical transport cart according to the present invention.
Figure 7 is a perspective view of another contemplated embodiment of tactical transport cart according to the present invention;
Figure 8 is a top view of the payload supporting area of tactical transport cart of Figure 7;
Figure 9 is a perspective view of another contemplated embodiment of the tactical transport cart according to the present invention.
Figure 10 is a perspective view of a ballistic shield mounted to tactical transport cart in an embodiment of the present invention;
Figure 11 is another perspective view of a ballistic shield mounted to tactical transport cart in an embodiment of the present invention;
Figure 12 is a mounting location of the ballistic shield of Figure 10;
Figure 13 is another view of the mounting location of the ballistic shield of Figure 10;
Figure 14 is a perspective view of an elevatable payload platform of tactical transport cart in accordance with a contemplated embodiment of the present invention;
Figure 15 is a side view of the elevatable payload platform of tactical transport of Figure 14;
Figure 16 is a perspective view of another contemplated embodiment of tactical transport cart according to the present invention;
Figure 17 is a perspective view of a bag attached to the tactical transport cart of Figure 16.
Figure 18 is a perspective view of a standard medical transport item utilized on the tactical transport cart of Figure 16;
Figure 19 is a side view of the tactical transport cart of Figure 18;
Figure 20 is a perspective view of the tactical transport cart of Figure 7 having handles that rotate, telescope, and stow;
Figure 21 is another perspective view of the tactical transport cart of Figure 7 having handles that rotate, telescope, and stow;
Figure 22 is another perspective view of the tactical transport cart of Figure 7 having handles that rotate, telescope, and stow;
Figure 23 is a perspective view of the tactical transport cart of Figure 7 having handles that rotate, telescope, and stow;
Figure 24 is a perspective view of another contemplated embodiment of tactical transport cart having a centrally located multifunctional attachment point according to the present invention;
Figure 25 is a partial top view of tactical transport cart having centrally located multifunctional attachment point of Figure 24;
Figure 26 is a partial rear view of centrally located multifunctional attachment point of Figure 24;
Figure 27 is a view of tactical transport cart having a stabilizing prop or support leg according to the present invention;
Figure 28 is another view of tactical transport cart having a stabilizing prop or support leg according to the present invention;
Figure 29 is a side view of tactical transport cart having a stabilizing prop or support leg according to the present invention;
Figure 30 is a partial view of tactical transport cart having underneath protection provided to the cart according to the present invention;
Figure 31 is another partial view of tactical transport cart having underneath protection provided to the cart according to the present invention;
Figure 32 is a partial bottom view of tactical transport cart having underneath protection provided to the cart according to the present invention;
Figure 33 is a view of a manually selectable hub as a component of a wheel of the tactical transport cart according to the present invention;
Figure 34 is another view of a manually selectable hub as a component of a wheel of the tactical transport cart according to the present invention;
Figure 35 is a rear view of a storage case having the tactical transport cart collapsed and packed inside of the storage case according to the present invention;
Figure 36 is a side view of a storage case having the tactical transport cart collapsed and packed inside of the storage case according to the present invention;
Figure 37 is a perspective view of an open storage case having the tactical transport cart collapsed and packed inside of the storage case according to the present invention;
Figure 38 is a rear view of the open storage case having the tactical transport cart collapsed and packed inside of the storage case of Figure 37;
Figure 39 is a top view of the open storage case having the tactical transport cart collapsed and packed inside of the storage case of Figure 37;
Figure 40 is a view of a cavity of the tactical transport cart according to the present invention;
Figure 41 is a view of an electrical enclosure of the tactical transport cart according to the present invention;
Figure 42 is another view of the electrical enclosure of the tactical transport cart of Figure 41 according to the present invention;
Figure 43 is a view of an electrical enclosure of the tactical transport cart according to the present invention;
Figure 44 is another view of the electrical enclosure of Figure 43;
Figure 45 is a perspective view of another contemplated embodiment of tactical transport cart with port according to the present invention;
Figure 46 is a close-up view of the port of Figure 45;
Figure 47 is a close-up view of tactical transport cart having a gauge with a digital display visual indicator according to the present invention;
Figure 48 is a close-up view of tactical transport cart having a gauge with a digital display visual indicator according to the present invention;
Figure 49 is another close-up view of tactical transport cart having a gauge with a digital display visual indicator according to the present invention;
Figure 50 is another close-up view of tactical transport cart having a gauge with a digital display visual indicator according to the present invention;
Figure 51 is a view of tactical transport cart having an on and off power failsafe according to the present invention;
Figure 52 is a view of locations for a port on tactical transport cart according to the present invention;
Figure 53 is an enlarged view of a port of Figure 52; and
Figure 54 is a side view of ports of Figure 52.

### Detailed Description of the Invention

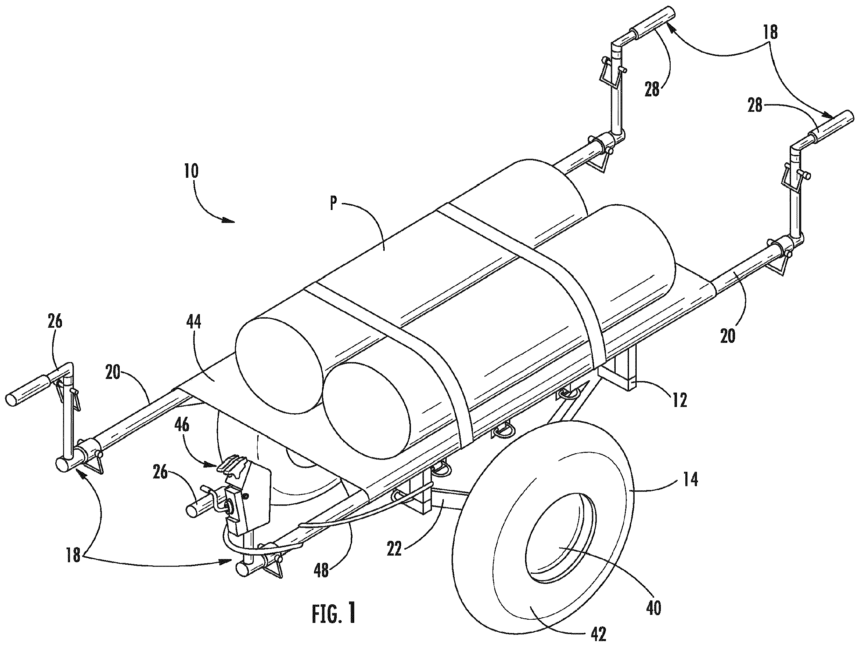

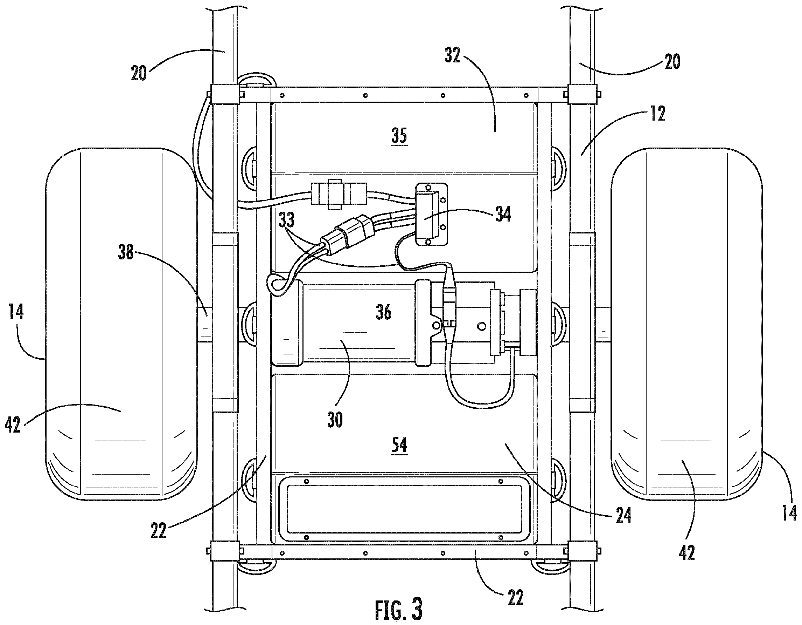

Referring now to the accompanying drawings and initially to Figures 1-3, one possible embodiment of a tactical transport cart according to the present invention is indicated generally at 10, and basically comprises a frame 12 supported on a pair of wheels 14, with a powertrain, indicated overall at 16, for driving the wheels 14, and a handle structure, generally indicated at 18, attached to the frame 12 for manual steering and guidance of the cart 10.

According to the invention, the frame 12 is an open, lightweight structure formed by a pair of laterally spaced-apart longitudinally-extending frame members 20 between which a triangular cart body 22 is centrally affixed and extends downwardly therefrom defining a lower enclosure 24 within the cart body 22. The powertrain 16 is housed within the enclosure 24 of the cart body 22 and basically comprises a motor 30, battery 32, and motor controller 34. The motor 30 is in the form of a motor and transaxle assembly contained within a common housing 36 and mounted within the lowermost region of the enclosure 24, with a pair of drive shafts 38 extending co-axially outwardly from opposite ends of the housing 36 and outwardly therefrom to opposite lateral sides of the cart body 22. The battery 32 and the motor controller 34 are contained in a common housing 35 mounted within the enclosure 24 of the cart body 22 adjacent the motor 30, with the motor controller 34 being operatively connected by cables 33 between the battery 32 and the motor 30 for controlling supply of motive power to the motor 30. In addition, one or more sealed storage compartments may be provided within the cart enclosure, such as representatively indicated at 54, to carry various smaller supplies, spare parts, tools, and the like.

Each wheel 14 comprises a central hub 40 about which is mounted an all-terrain high-flotation tire 42. The wheels 14 are affixed in coaxial relationship by mounting their respective hubs 40 to the laterally outward ends of the drive shafts 38 of the motor/transaxle assembly, thereby supporting the frame 12 substantially entirely above the axis of the wheels 14. The handle structure 18 comprises a first pair of laterally spaced-apart handles 26 attached to respective rearward ends of the frame members 20 and a second pair of laterally spaced-apart handles 5 attached to respective forward ends of the frame members 20, in perpendicular or orthogonal relationship to the axis of the wheels 14. According to the invention a platform 44 is affixed to the frame members 20 adjacent the upper side of the cart body 22 for defining a payload supporting area thereabove on which may be transported any of various types of payloads, as representatively depicted by payload P.

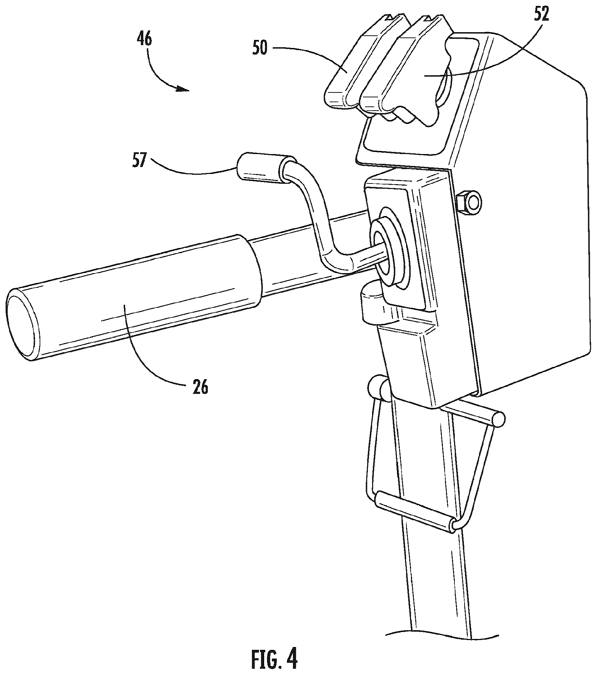

A switch device, indicated overall at 46, is mounted on one of the rear handles 26 and is operatively connected by a cable 48 to the motor controller 34 for selective remote actuation and deactuation of the motor 30. As depicted in Figure 4, the switch device 46 includes an on-off switch 50, a speed switch 52 selectable between high power and low power modes, and a throttle control lever 57 for modulating the delivery of battery power to the motor 30. The motor/transaxle housing 36, the battery/controller housing 35, the switch device 46 and the connections therebetween are each sealed against water intrusion.

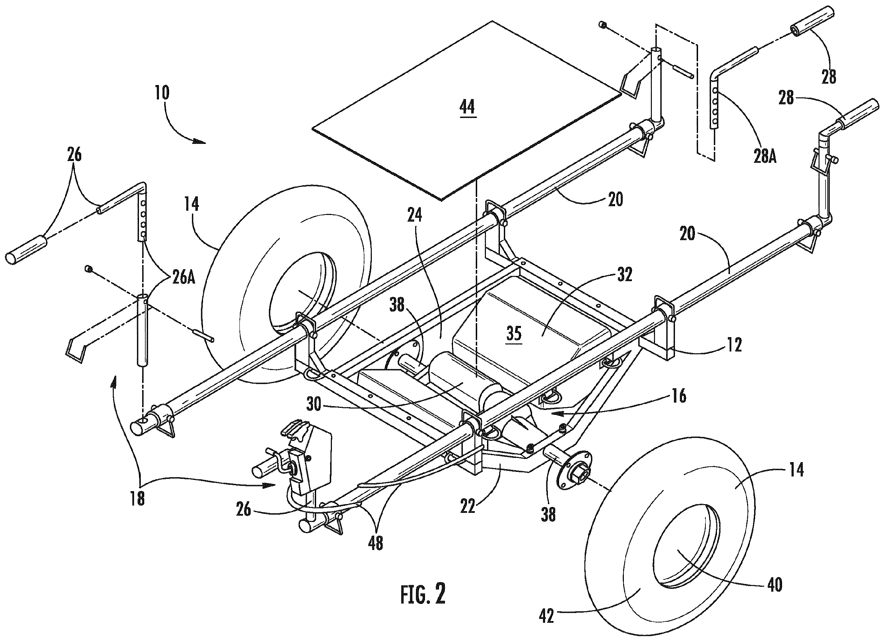

The rearward handles 26 of the handle structure 18 are configured for manual grasping of the handles by a single human operator for steering movement of the cart 10 while simultaneously operating the motor controller 34 via the switch device 46. Either or both of the forward handles 28 may optionally be grasped by a second human operator to assist in maneuvering and guidance of the cart 10 during navigation, but no controls for powered operation of the cart are provided on or in proximity to the forward handles 28. Both sets of handles 26, 28 may be provided with a series of adjustment holes 26A, 28A, best seen in Figure 2, to enable fine adjustment of the height of the handles and their extension forwardly and rearwardly from the frame 12, as may be desirable to adapt the handles 26, 28 for different operators.

The operation of the cart 10 may thus be understood. All of the structure of the cart 10, including particularly the frame 12, wheels 14, powertrain 16 and handle structure 18, is designed dimensionally and in configuration to facilitate manual navigation over diverse and varied terrains by a single human operator. More specifically, the cart 10 can be maneuvered manually, either under the drive power on the powertrain or solely under the manual power of the operator, over substantially any terrain over which the human operator can walk, crawl or swim, including in particular both ground surfaces of topographic terrains and underwater and other water-covered hydrographic terrains. In topographic terrains, the cart 10 is capable of powered or unpowered rolling movement under the guidance of an operator over paved and unpaved ambulatory land surfaces including natural surfaces such as fields, meadows, forests, woods, hills, mountains, rocks, unpaved trails, caves, caverns, tunnels, and other above ground and subterranean land surfaces, and man-made surfaces such as roads, paths, hallways, breezeways, step structures, staircases and other outdoor and indoor man-made surfaces. In such environments, the operator manually guides rolling movement of the cart 10 over the ground surface via the handles 26 while walking, running or even crawling behind the cart, with selective activation of the switch device 46 to assist with powered motivation of the cart 10 as needed.

Owing to the lightweight frame structure, the use of all-terrain high-flotation tires, and sealed powertrain components, the cart 10 is equally capable of partially and fully submerged powered or unpowered movement over water-covered hydrographic terrains including creek beds, stream beds, river beds, pond and lake beds, flooded areas, swamps and muddy regions, culverts, storm sewers, drains, gutters, ditches, aqueducts, sluiceways, causeways, spillways and other natural and man-made underwater surfaces. In such environments, the operator manually guides rolling movement of the cart 10 on the underwater surface from behind the cart via the handles 26 while walking over or wading through areas covered with relatively shallow depths of water, or even floating or paddling behind the cart through areas covered with deeper depths of water. Even in areas with water depths above the height of an operator, the cart 10 is capable of rolling navigation over the underwater surface, although the operator may need underwater breathing apparatus depending on the underwater distance to be traveled.

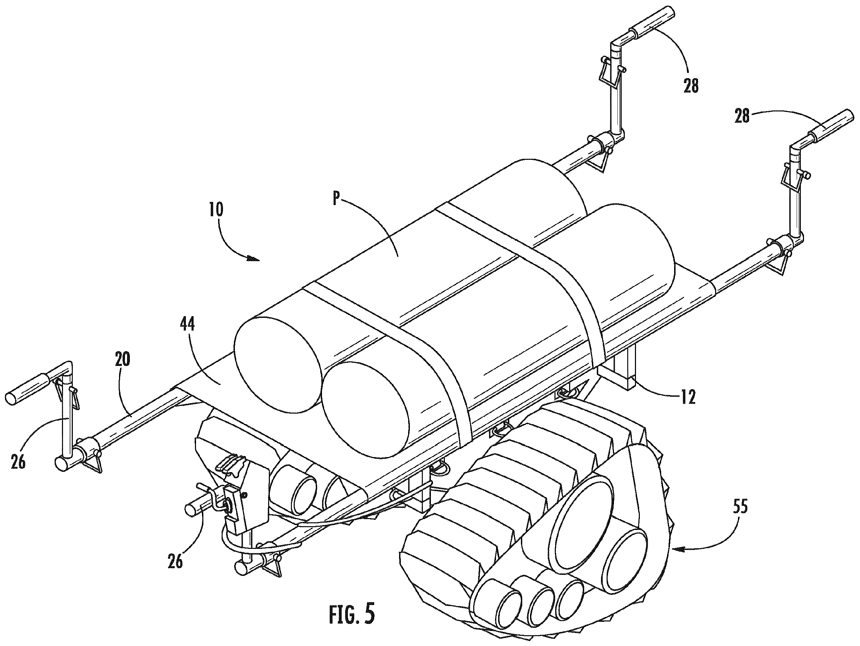

Persons skilled in the art will recognize and understand that various additional and alternative features and embodiments of the cart are possible within the scope of the invention. For example, the cart could be equipped with continuous track mechanisms instead of wheels, such as representatively depicted at 55 in Figure 5. As is known, track systems can provide enhanced navigation over soft terrains and also sharper steering and turning through driving the track mechanisms at differential speeds and/or in opposite directions, but otherwise track mechanisms are generally interchangeable with wheel/hub assemblies on wheeled vehicles.

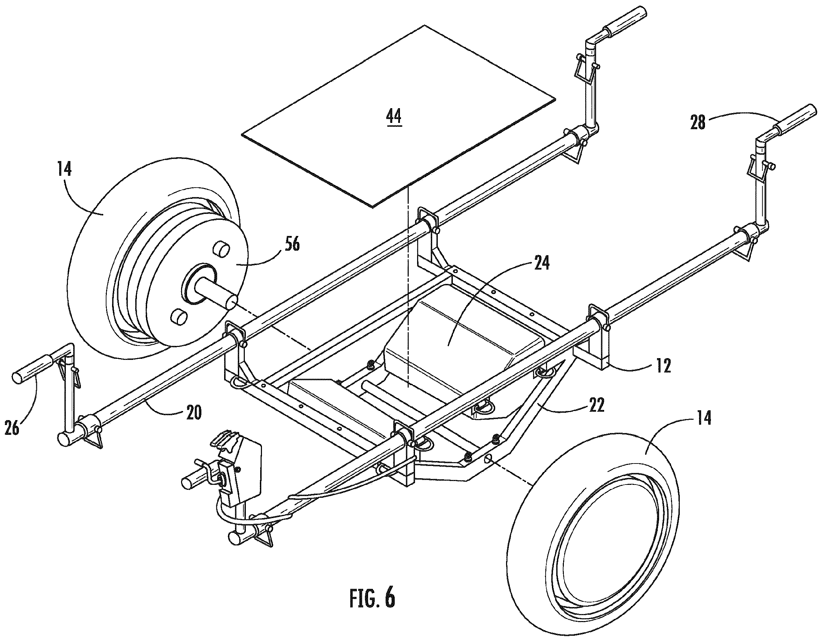

Alternatively, in wheeled embodiments of the cart, each of the wheels could be equipped with an individual hub-mounted motor, such as depicted at 56 in Figure 6, instead of the motor/transaxle assembly. Hub mounted wheel motors are well known and would offer the advantage of freeing additional space within the enclosure of the cart body to carry smaller items beneath the platform.

As will also be understood, the payload platform in the embodiments of the figures are merely representative. Various configurations of supports for carrying payload may be affixed to the frame instead of, interchangable with or in addition to a platform configuration, including for example but without limitation open and enclosed cargo boxes, a litter for carrying injured or wounded personnel, and any number of other purpose-built payload carriers designed for specific cargo applications.

Likewise, differing forms of handle structures are also contemplated. For example, a U-shaped or other handle structure transversely spanning between the frame members could offer the advantage of allowing an operator to actuate and deactuate the powertrain and guide navigation of the cart via different hand positions or possibly with only one hand.

While the cart of the present invention is not intended to float nor otherwise to be operable on the surface of a body of water, the cart could be equipped with supplemental flotation units to partially offset the weight of the cart and payload so as to allow the wheels, tracks, or other transport propulsion members of the cart to remain engaged with underwater and other water-covered hydrographic terrains but would aid in preventing the transport propulsion members from sinking into soft underwater surfaces, such as under ponds, streams and the like.

The advantages of the cart 10 for tactical uses by military, law enforcement, fire, rescue and emergency personnel will therefore be appreciated and understood. Fundamentally, the cart of the present invention combines into a single unit the capabilities of various other existing known transport devices. Further, the capability of the cart to navigate over virtually any topographic or hydrographic terrain expands the potential applications and uses of the cart enormously. The ability for a single operator to navigate the cart over such terrains further expands the applications for the cart. In a military setting, soldiers can transport weapons, munitions, equipment, food, water, and the like into battle settings in greater quantities, more rapidly and with less effort than any known conventional means. Law enforcement, fire, rescue and emergency personnel are similarly benefited by an ability to transport gear more quickly and easily into remote areas accessible only by foot.

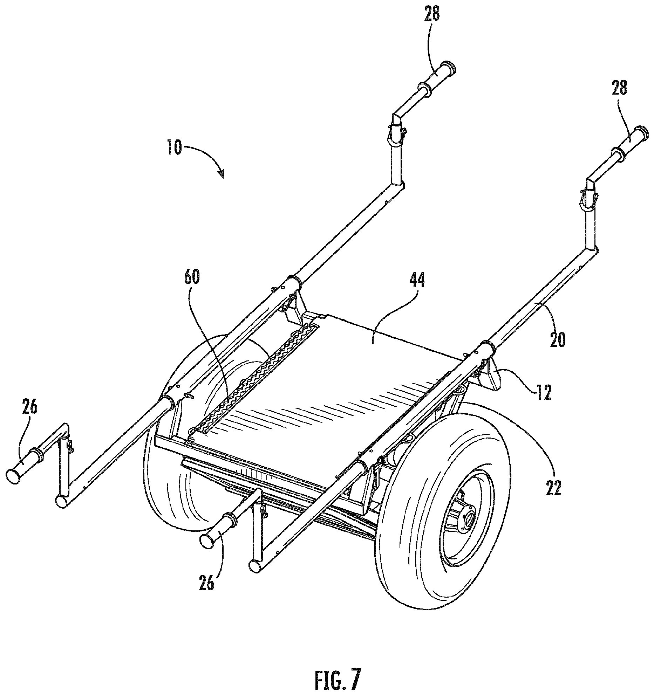

Figure 7 is a perspective view of another contemplated embodiment of tactical transport cart according to the present invention. In an embodiment of the invention, an attachment is attachable to frame 12, frame members 20, payload platform 44, cart body 22, or a combination thereof. Preferably, payload platform 44 is modifiable to accommodate payload. For example, modification to the platform may include, but is not limited to, the platform being a series of receptacles to receive containers of fuel, the platform being slats arranged in such a way as to allow drones to land and take-off, or combinations thereof. Preferably, the shape of payload platform 44 is rectangular. However, the shape can be of any shape suitable for the use or application of the cart.

Payload platform 44 is configurable and accepting of a variety of attachments for securing diverse loads or load carrying devices. Examples of attachments include, but are not limited to, standard medical transport litters secured or attached such as through a clamp type mechanism or other mechanism, securing weapons platforms for operational use or transport in a tactical environment, supply material including ammunition, water, fuel, food, medical supplies, communication gear, collapsed shelters, watercraft, gas cylinders, generators, power supplies, clothing, or any other material needs of an end user or cart operator. Other attachment points, hooks, clamps, and tie straps on the cart can be used independent of payload platform 44 or a multifunctional attachment point to enable hoisting or anchoring of the cart or other desired movement. The same attachment points can also enable securing of payload P.

The attachment is attachable to the tactical transport cart at one or more attachment points, typically in the vicinity of the payload supporting area. There are also various possible types of attachments within the scope of the present invention. Figure 7 illustrates the attachment being a hard point for attachment or connection. A non-limiting example of the hard point for attachment or connection is a length of pre-drilled metal track referred to as an L-Track or logistics track 60 attached to cart body 22. Logistics track 60 provides a hard attachment point to which items can attach.

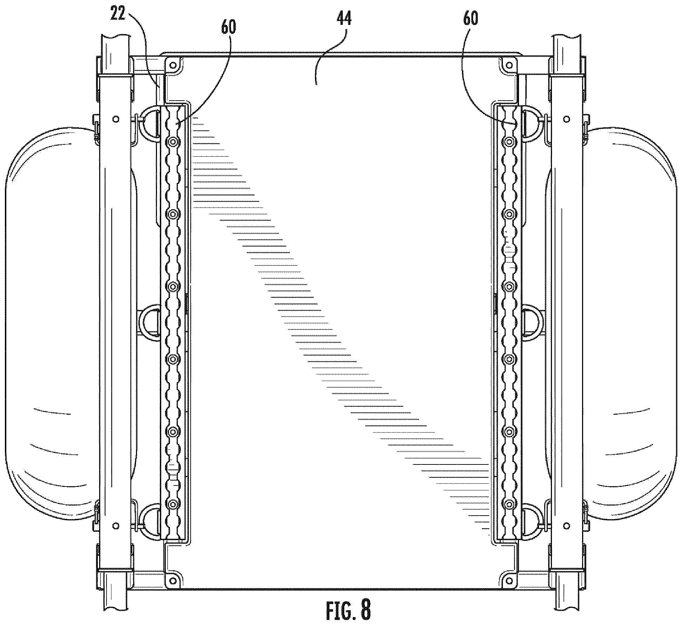

Figure 8 is a top view of the payload supporting area of tactical transport cart of Figure 7. Also shown in Figure 8 is a top view of the payload supporting area having two logistic tracks 60 on opposing sides of cart body 22. Although shown on opposing sides, attachments could be present anywhere on cart 10.

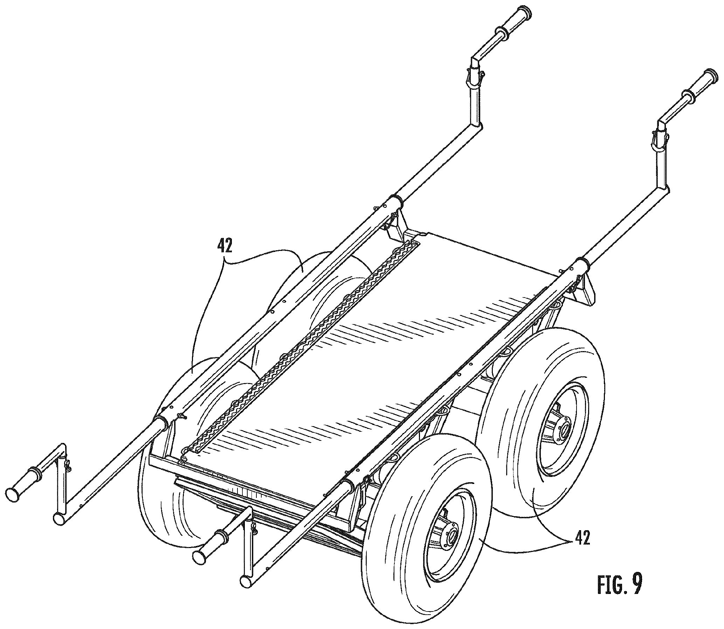

Figure 9 is a perspective view of another contemplated embodiment of the tactical transport cart according to the present invention. Figure 9 illustrates the tactical transport cart having four wheels. The present invention contemplates that the number of wheels may vary.

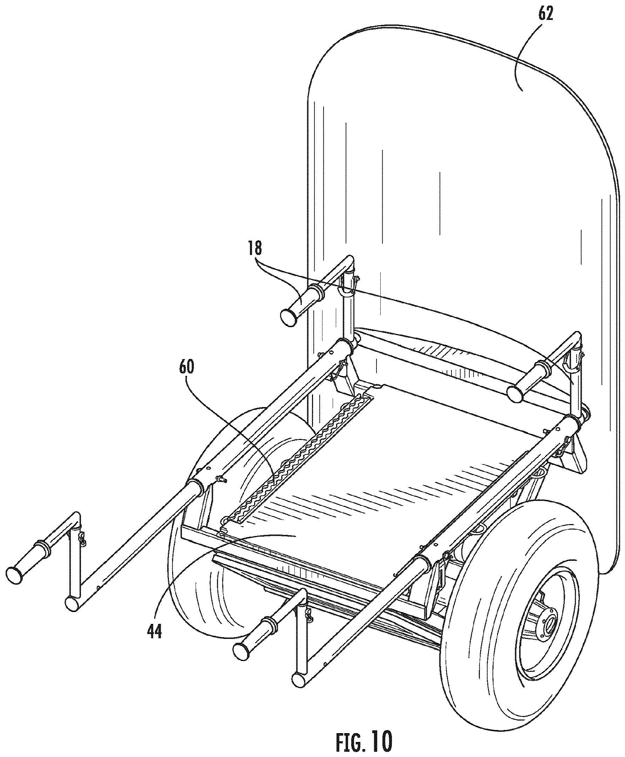

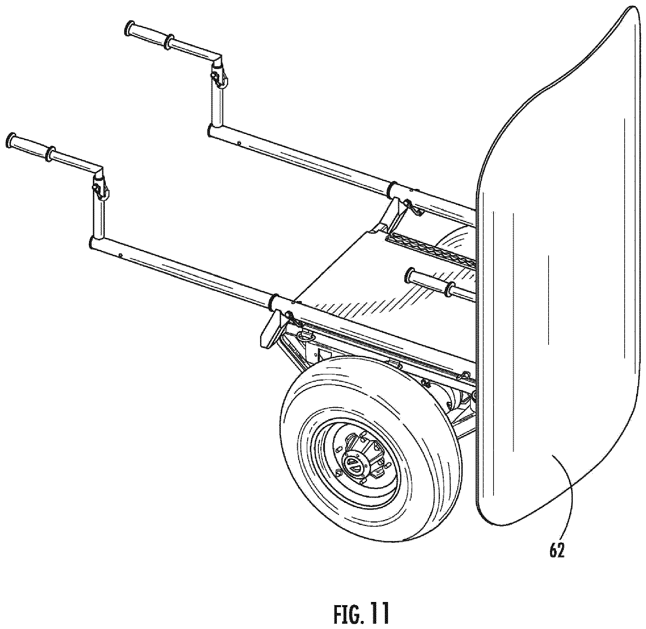

Figure 10 illustrates a ballistic shield 62 mounted to tactical transport cart according to the present invention. By way of utilizing configurable handle structure 18, payload platform 44, supporting payload area, and other cart features, ballistic shielding or protection devices of varying strengths and types are mountable to the cart. The shielding is useful for protecting operators of the cart, personnel on the cart, vital cart components or cargo, among other items. Figures 10 to 12 illustrate mounting and locating options for ballistic and fragmentation protection.

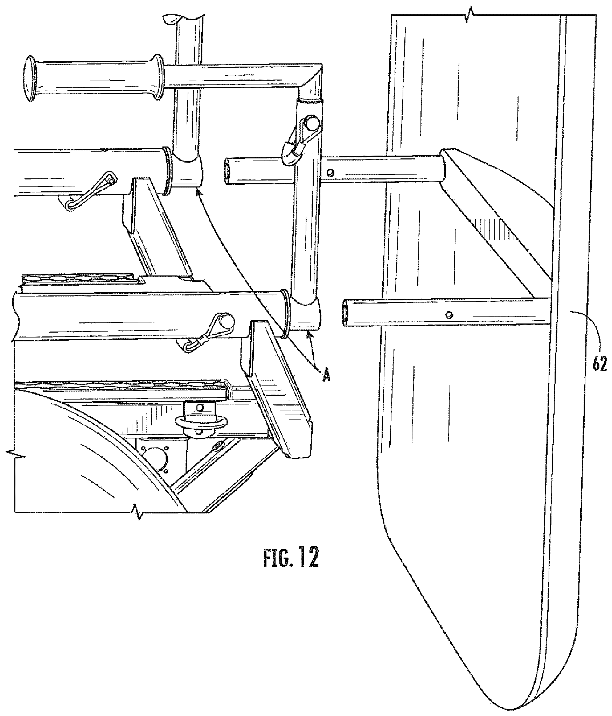

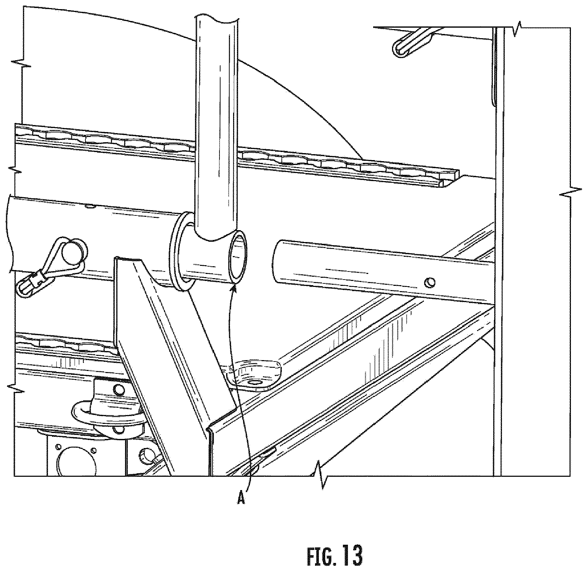

The mounting location A shown in Figure 12 is not exclusive to mounting of ballistic protection but could be varied to accommodate other attachment or equipment needs. The ballistic shield could be mounted, for example, to the hard point for attachment or connection or to the cart body by sockets, bolts, or a clamp. An alternate view of mounting location A is shown in Figure 13.

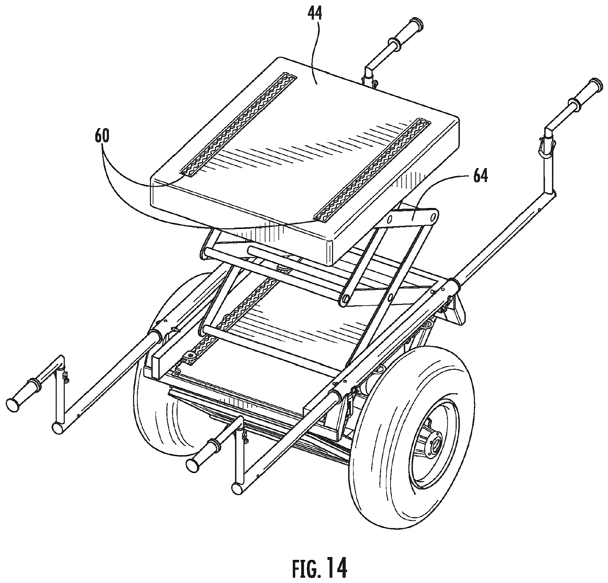

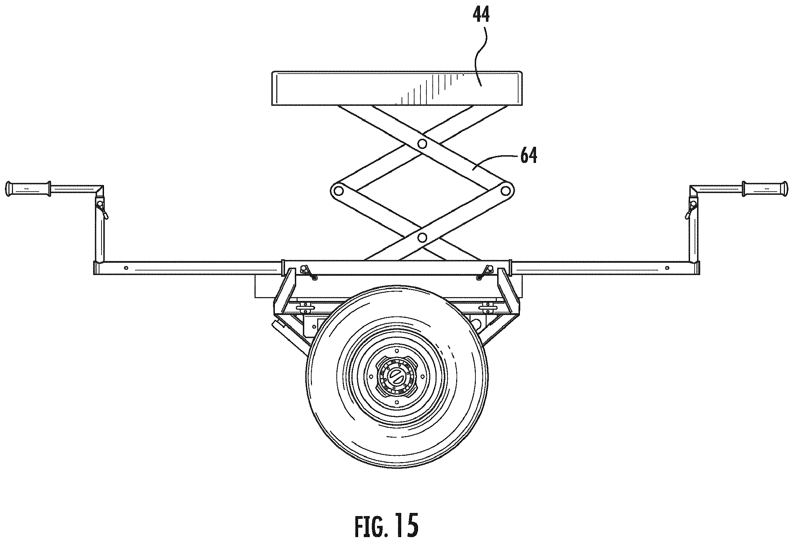

Figure 14 illustrates an elevatable payload platform of tactical transport cart in accordance with a contemplated embodiment of the present invention. As shown in Figure 14, payload platform 44 is elevatable to varying heights for a variety of purposes by an elevation mechanism 64. The elevated payload platform is advantageous in that it enhances or complements ergonomic unloading or loading of the cart, is useful for mechanical service jobs, medical applications, or other applications, provides selectable height variation for ballistic protection, and provides height variation as it pertains to augmenting payload distribution. Elevation mechanism 64 of the cart is powered using various electrical routings in the cart. Figure 14 shows payload platform 44 elevated from its original position. As illustrated, elevation is achieved through elevation mechanism 64 having a scissor lift like mechanism or other device. Figure 15 is a side view illustrating that payload platform 44 is movable in two directions. Payload platform 44 is mechanically or hydraulically lowered or raised. The payload platform can be used for various uses including, but not limited to, patient medical procedures or for lifting loaded cases for transfer to planes, vehicles, ledges, among other uses.

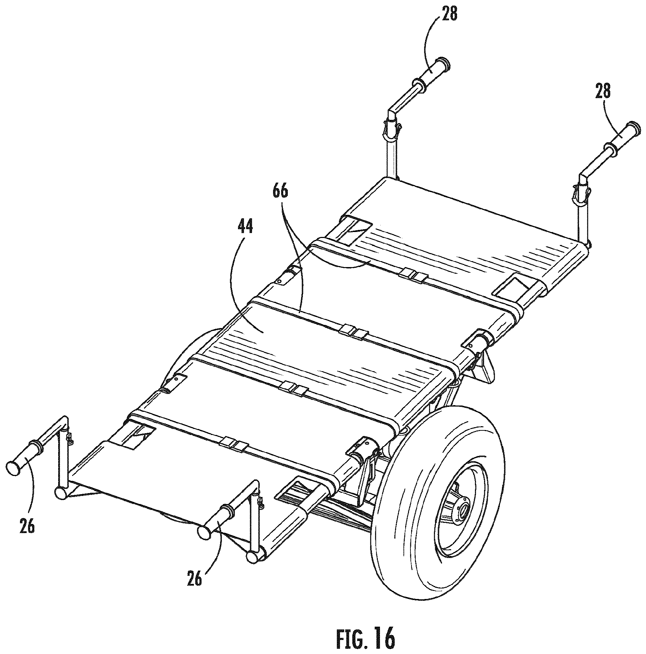

Figure 16 is a perspective view of another contemplated embodiment of tactical transport cart according to the present invention. Figure 16 illustrates payload platform 44 in a form of a cloth. Independent of using payload supporting area attachments or attachment points, the cloth can be secured to the cart to enable the carrying of a range of payloads. The cloth is dimensioned in a manner that accommodates most standard medical litters and similar medical transport items such as stokes baskets, spine boards, rescue systems, among others. Independent of medical litters and similar medical transport items, the cloth may be used as a primary form of transport. Straps 66 are optionally attached to the cloth to secure varying payloads directly on top of the cloth. The use of the cart with cloth payload platform is preferably modular in such a manner that the cloth may remain attached whether the handles 26, 28 are fully extended or not without impedance to cart performance or operation.

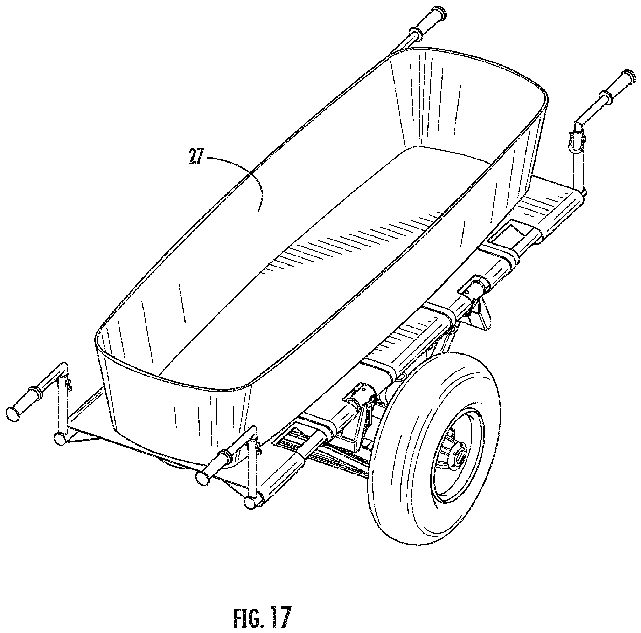

Figure 17 is a perspective view of a cargo bag attached to the tactical transport cart of Figure 16. For example, the cargo bag may be of cloth or may have hard material sides or may have similar rigid structures attached to the cloth overall.

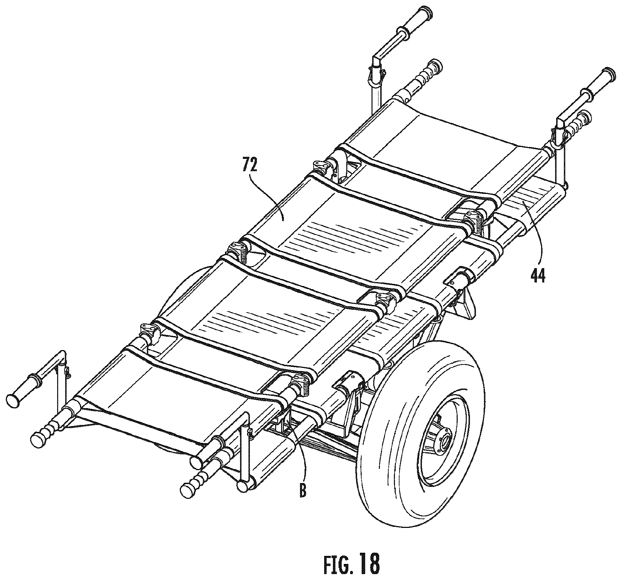

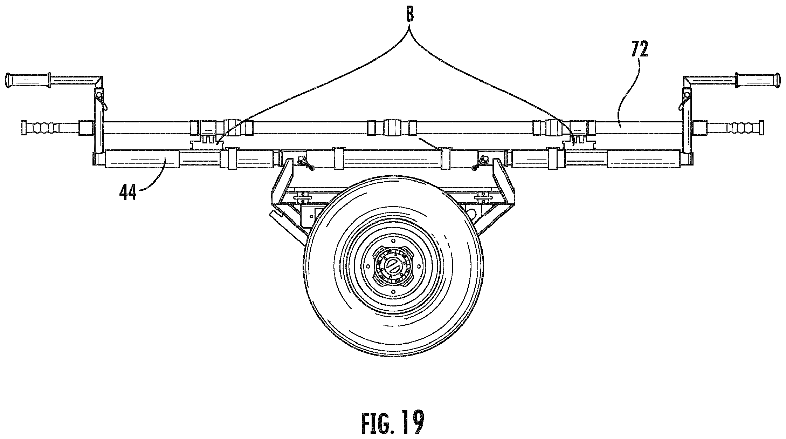

Figure 18 illustrates a standard medical transport item utilized on the payload cloth of the cart, more particularly a litter 72 attached at point of attachment B to the cloth payload platform. Figure 19 is a side view of the cart of Figure 16.

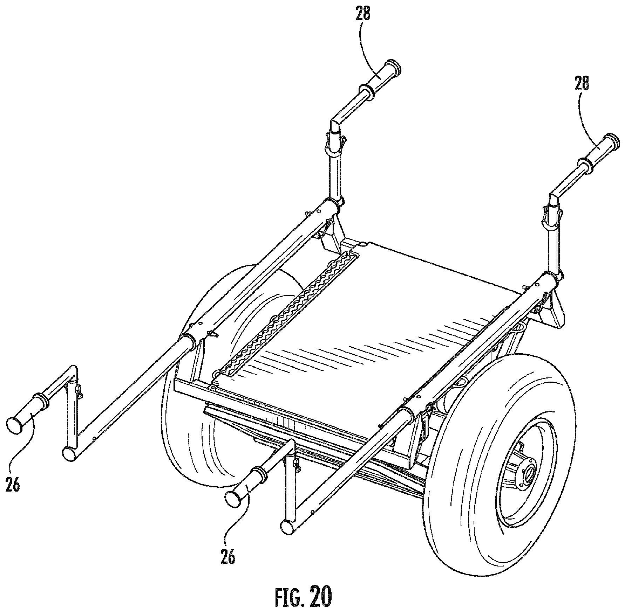

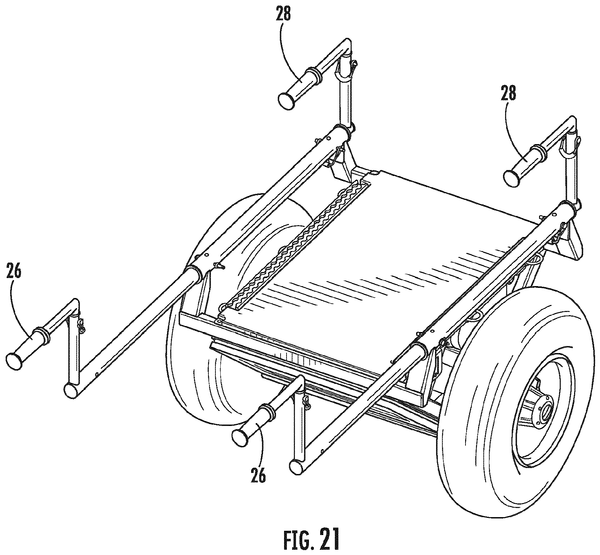

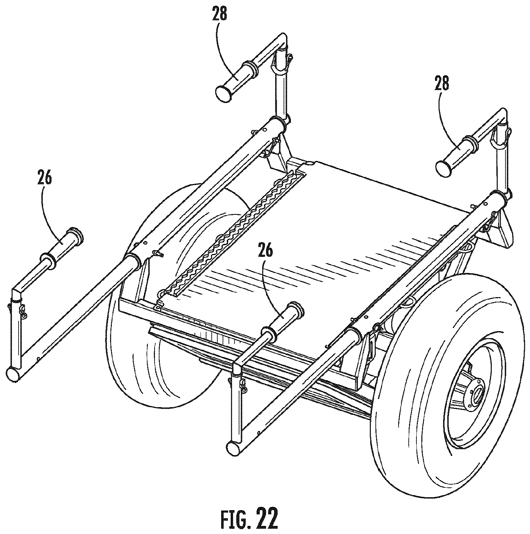

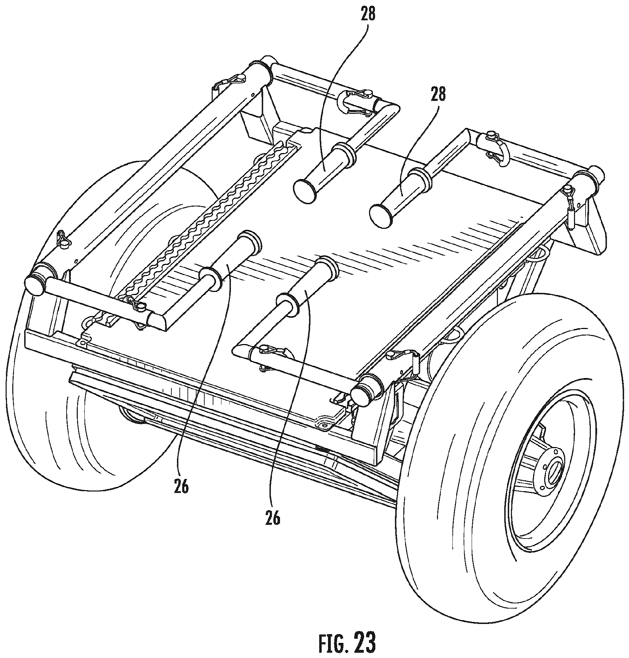

Figure 20 is a perspective view illustrating that tactical transport cart of Figure 7 has handles that rotate, telescope, and stow. Figures 20 to 23 illustrate that handles 26 rotate, telescope, and stow. This feature allows for configuring and operating the cart at varying lengths. This feature of the cart also allows for the cart to be collapsed into a dimension for ease of packaging, transport and operation in confined spaces. As shown in Figure 20, handles 26 are each in a first position facing outward. Handles 28 are each in a first position facing outward and in an opposite direction from the direction of handles 26. As shown, the handles can be turned in different directions. Figure 21 illustrates handles 28 rotated inward and facing in the same direction as handles 26. Figure 22 illustrates handles 26 rotated inward and facing toward handles 28. Figure 23 illustrates handles 26 and 28 having been telescoped and collapsed to be stowed.

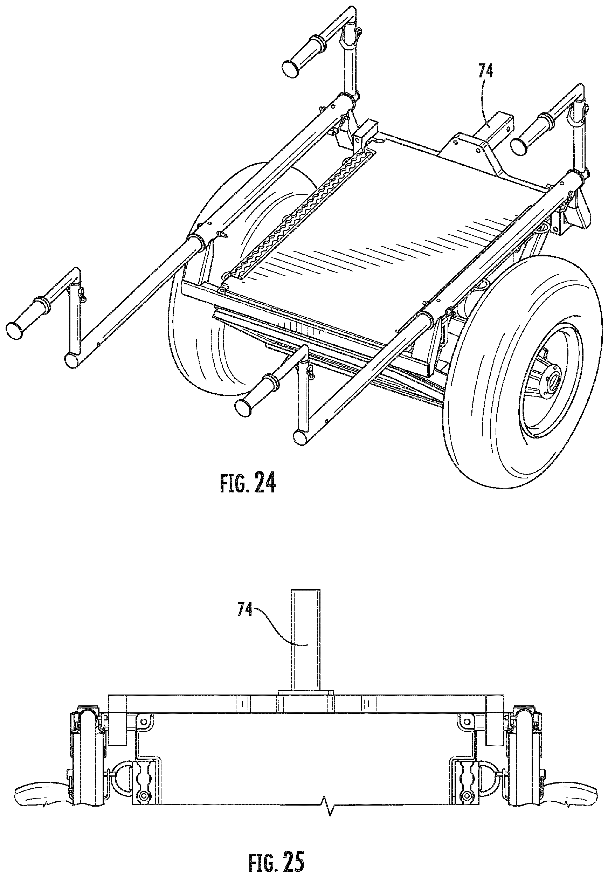

Figure 24 illustrates the cart having a centrally located multifunctional attachment point 74 that enables the securing of one or more items to assist or augment cart operation in a manner that the cart could be towed behind or in tandem with other transport vehicles or machines. Examples include, but are not limited to, multifunctional attachment point 74 for: manual or motor driven winches to augment transport or recovery; carts linked together for joint operation such as teaming; hitches or pins or similar mechanisms to allow for towing; chains, ropes, cables, or other similar items to allow towing or pulling of the cart or other items; augmentation of propulsion using a powered propeller, and augmentation of loading items secured on the payload platform or by way of the payload platform attachment points.

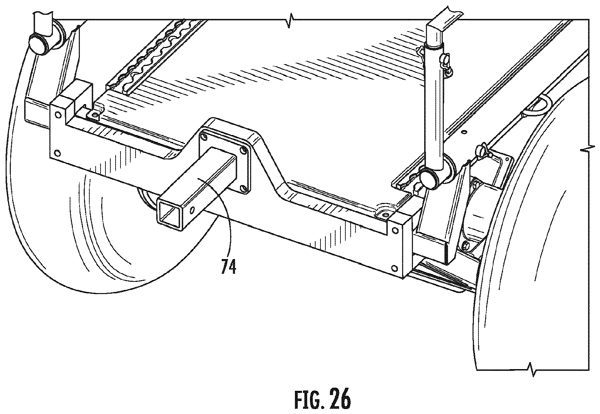

Figure 25 is a partial top view of the centrally located multifunctional attachment point 74. Figure 26 is a partial rear view illustrating centrally located multifunctional attachment point 74 to which various payloads, winches, other towed machines or vehicles are optionally attached. The multifunctional attachment point can serve as a mounting location for weaponry, communications gear, construction implements, ballistic protection, hard payload carriers, among other items.

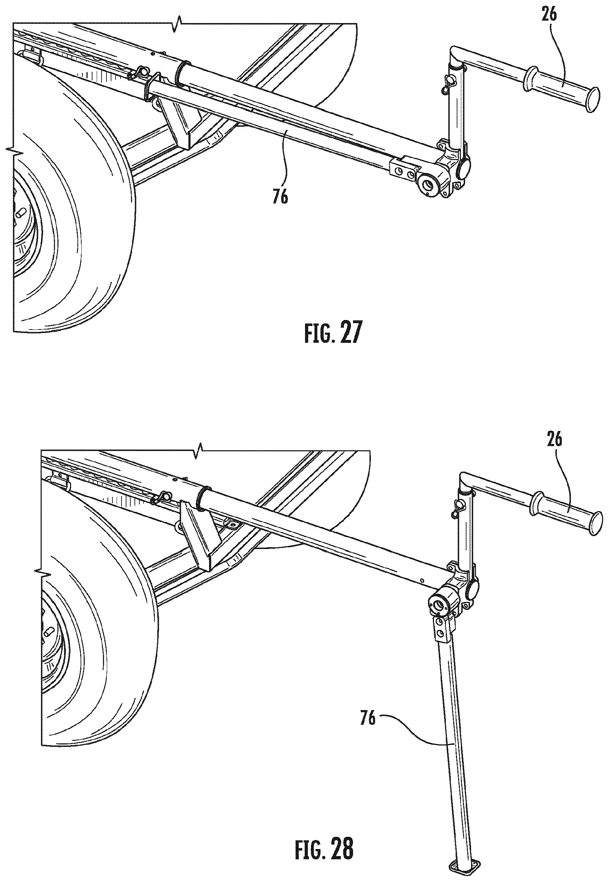

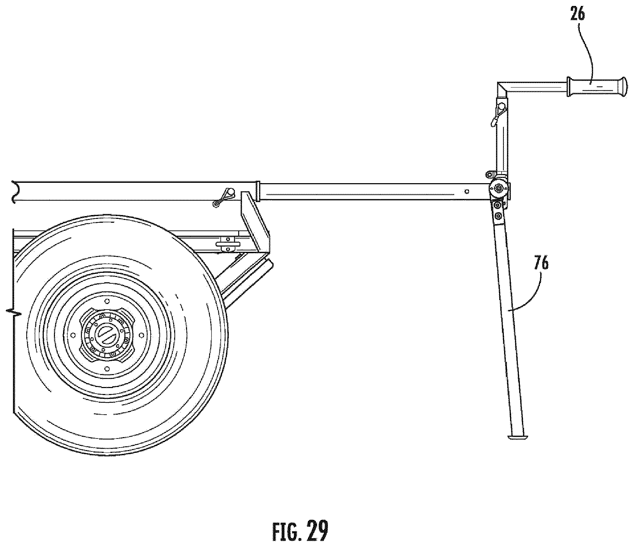

Figures 27 to 29 illustrate that the cart optionally comprises a stabilizing prop or support leg 76 attached or affixed to a handle at opposing ends of the cart. Stabilizing prop or support leg 76 primarily serves, for example, to stabilize the cart when loading, unloading, storing, staying static for employment of other cart features or repair. The stabilizing prop or support leg 76 can be utilized, for example, when loading or unloading persons. However, stabilizing prop or support leg 76 can also be used for other purposes such as a patient intravenous (IV) pole or as a light mount. To maximize stability or other desired performance characteristics, the cart may preferably accommodate up to four stabilizing prop or support legs 76 of the same or varying lengths, degrees of motion, shapes, orientations, and modularity. Figure 27 illustrates stabilizing prop or support leg 76 in a first upward position. Figure 28 illustrates stabilizing prop or support leg 76 in a second downward position. Figure 29 is a side view of stabilizing prop or support leg 76 of Figure 28. The stabilizing prop or support leg 76 can be affixed or attached to one or more sides of the cart, and the shape and configuration are preferably modular.

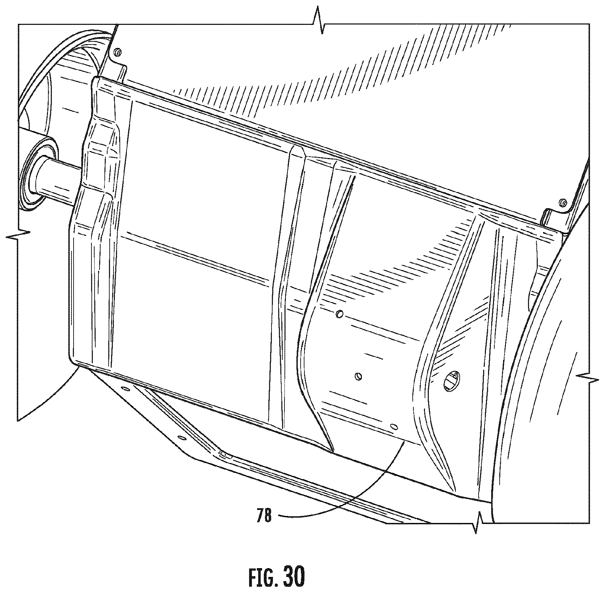

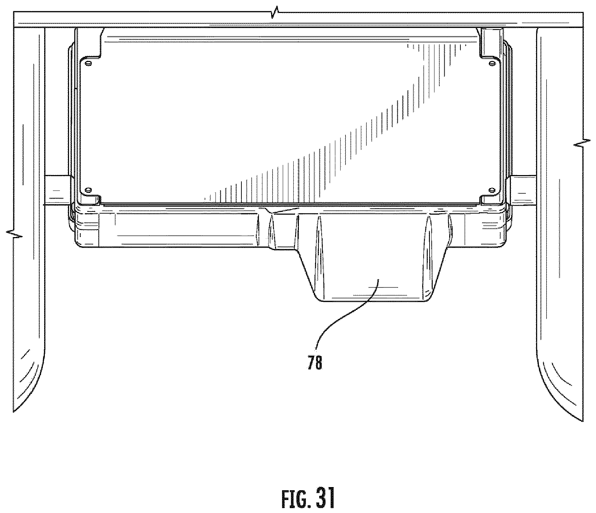

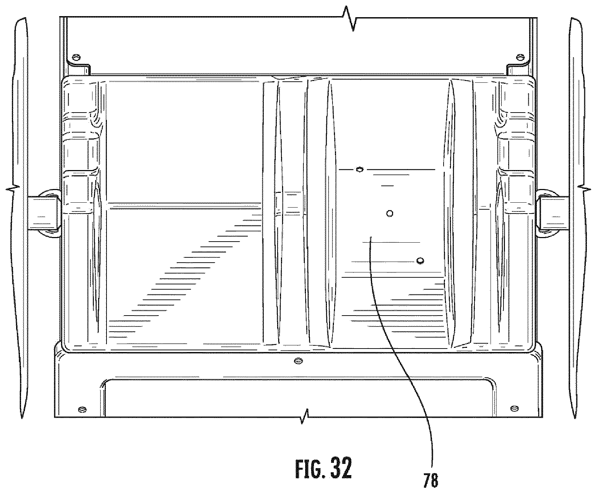

The angular design of the frame and complementary cart components contribute to the overall protection of the internal components of the cart. Figure 30 illustrates underneath protection provided to the cart, more particularly a lower skid plate 78 having a three-dimensional shape to augment protection of the lower cavity of the cart. Figure 31 is another view of lower skid plate 78. Figure 32 is a partial bottom view of lower skid plate 78.

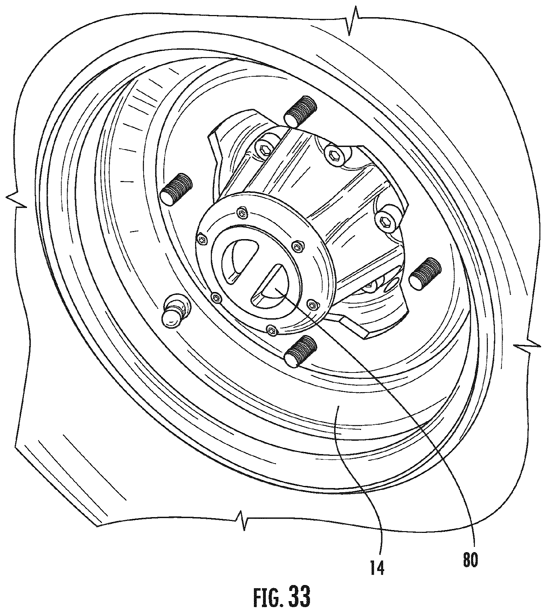

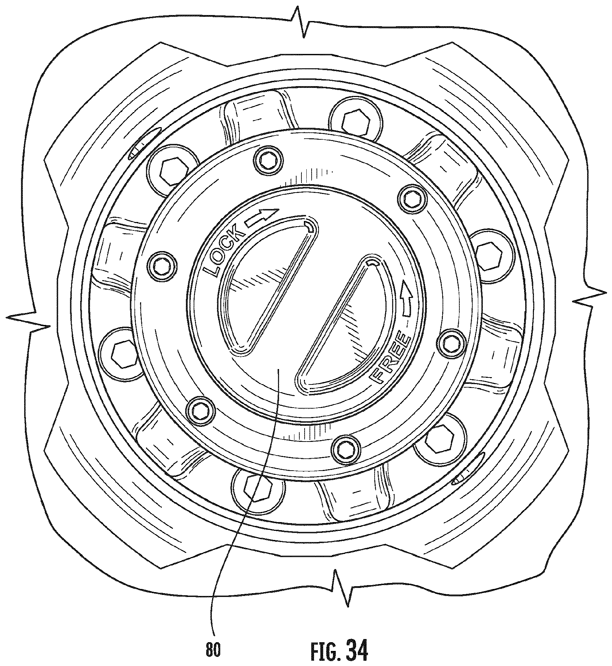

Figure 33 illustrates a manually selectable hub 80 as a component of wheel 14 of the cart. Manually selectable hub 80 is selected to a locked position or a free position. The locked position is for powered movement whereas the free position enables the cart to be rolled, pushed, towed, for example, under circumstances where powered movement is not desired or available. Important to powered operation of the cart, motor braking mechanism (not shown) is available when utilizing the locked position. Figure 33 shows that manually selectable hub 80 is manually turned to lock or to unlock allowing the cart to turn under power or manually be pushed or towed. An alternate view is shown in Figure 34 in which arrows indicate a direction of rotation in which the hub is turned. Examples of manually selectable locking hubs suitable for use on the cart of the present invention are commercially available from G2 Axle & Gear company.

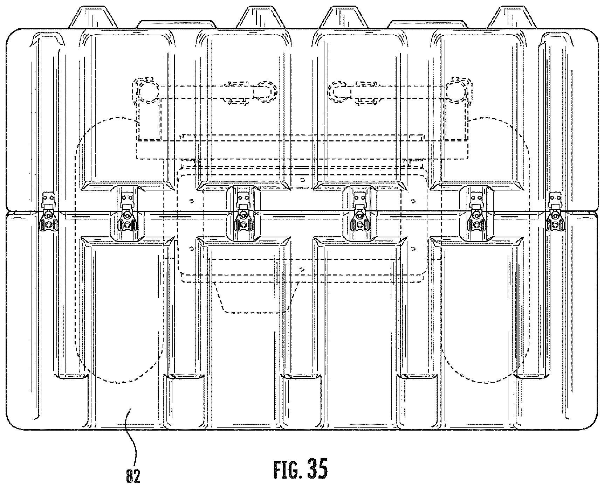

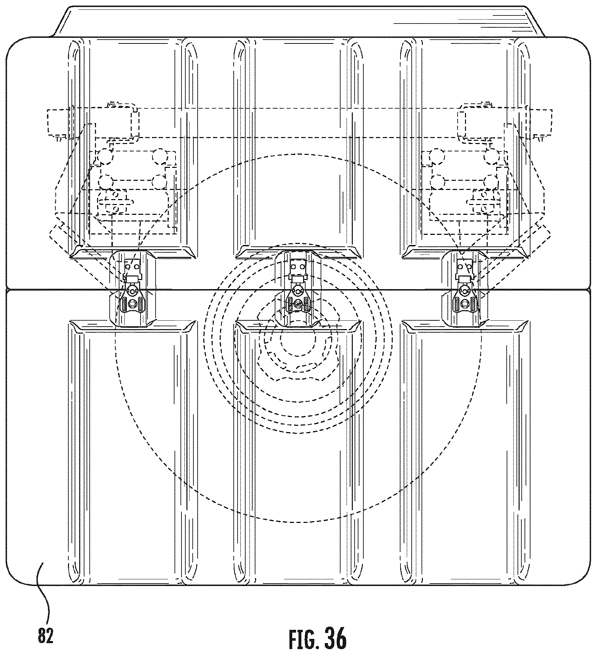

Figures 35 to Figure 39 illustrate that the cart is collapsible for purposes of transport in a specialized container or case 82 such as a rotomolded air drop case. The cart of the present invention is foldable and configurable such that the cart is easily stored or transported when not in use. Case 82 allows for rigging and delivery via aircraft drop, among other modes of transportation. Figure 35 is a rear view of case 82 having the cart collapsed and packed inside of case 82. Figure 36 is a side view of case 82 having the cart collapsed and packed inside of case 82.

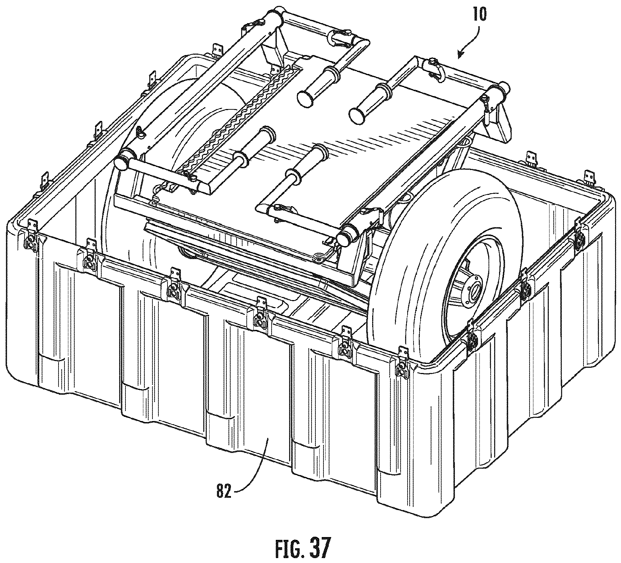

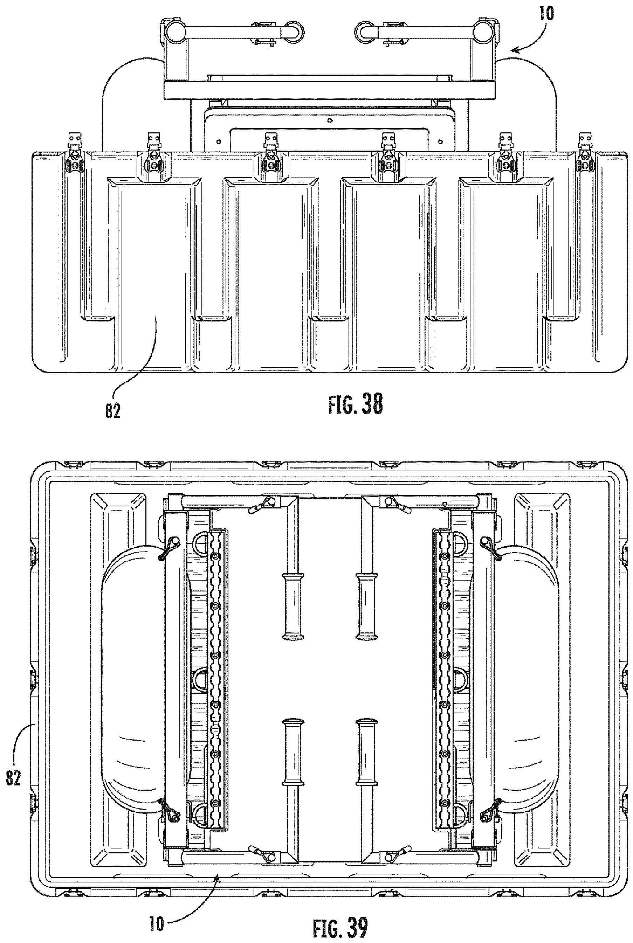

Figure 37 is a perspective view illustrating cart 10 collapsed and packed inside open case 82. Figure 38 is a rear view of cart 10 collapsed and packed inside open case 82. Figure 39 is a top view of cart 10 collapsed and packed inside open case 82.

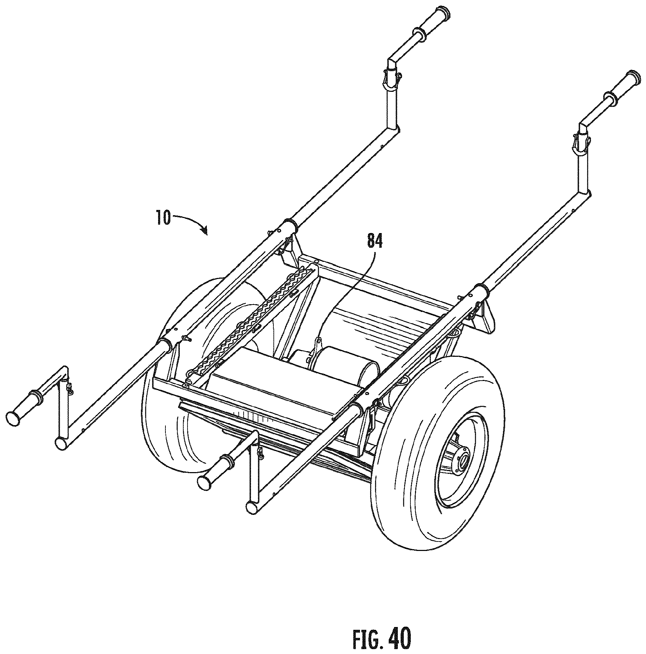

Figure 40 is a view of a cavity of the tactical transport cart according to the present invention. Figure 40 illustrates that a cavity 84, or other features of components, within cart 10 can be modified for tool storage or multipurpose use. Cart 10 has capacity in which components or other cart features can be exploited or housed to further enhance operation. Unoccupied space within enclosures or the frame can be utilized for multi-tool or other critical item storage. The payload platform when detached could function as a spare wheel or disc that can be applied to replace a damaged or worn tire. Figure 40 illustrates gross modularity of major cart components such that components could be located in many different configurations within the space.

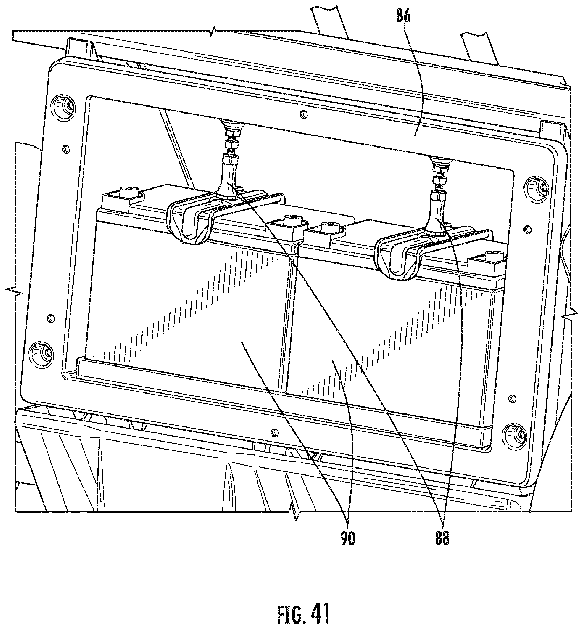

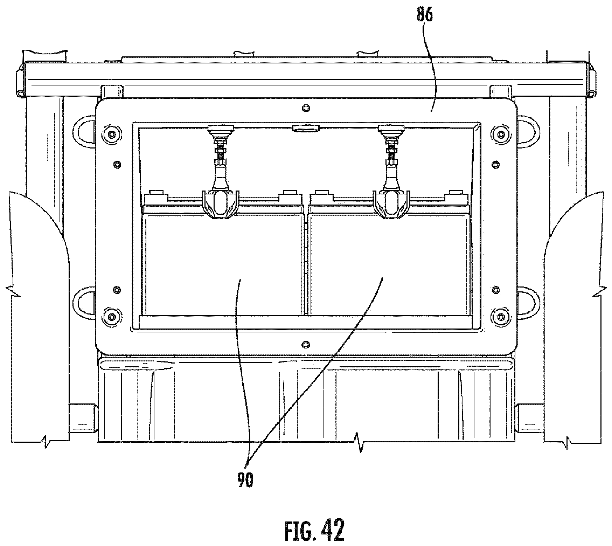

Figure 41 is a view of an electrical enclosure of the tactical transport cart according to the present invention. As shown in Figure 41, cart 10 comprises an electrical enclosure 86. Electrical enclosure 86 houses major electrical components such as batteries 90 and routings of the electrical system and has a variety of features. Electrical enclosure 86 is configurable to varying battery types, shapes, sizes, orientations, and configurations. Electrical enclosure 86 secures batteries 90 into place via hardware 88 to better stabilize and protect the batteries during cart use. Electrical enclosure 86 is sealed in a manner that prevents water and other debris intrusion thus offering protection to internal components and augmenting the operation of the cart over water-covered terrains. Independent and external of the sealed electrical enclosure there are components or points at components that are reinforced by varying enhancements to further augment the purpose of protecting against water or other debris intrusion. Figure 41 shows one configuration and style of batteries 90 and how the batteries are secured. An alternate view of the batteries of Figure 41 is shown in Figure 42.

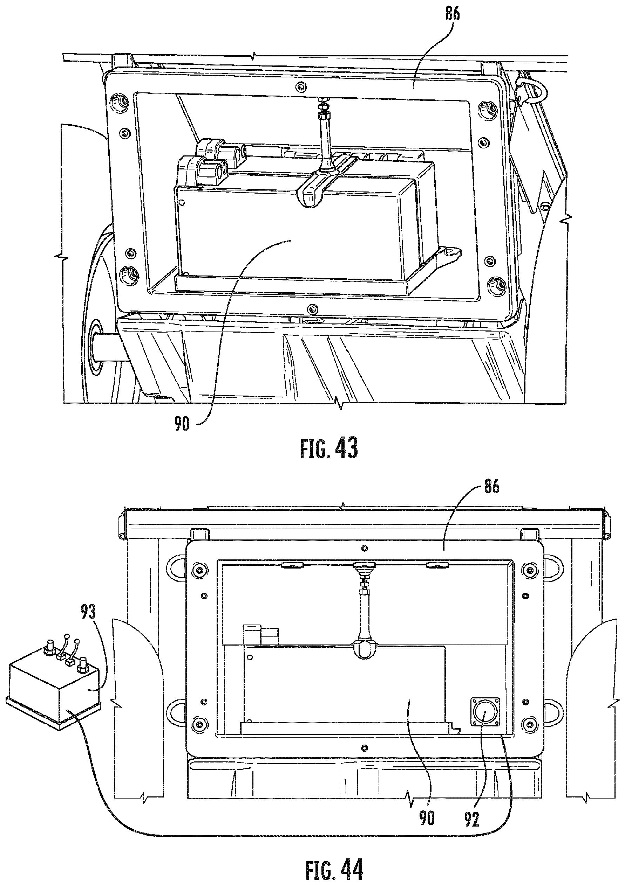

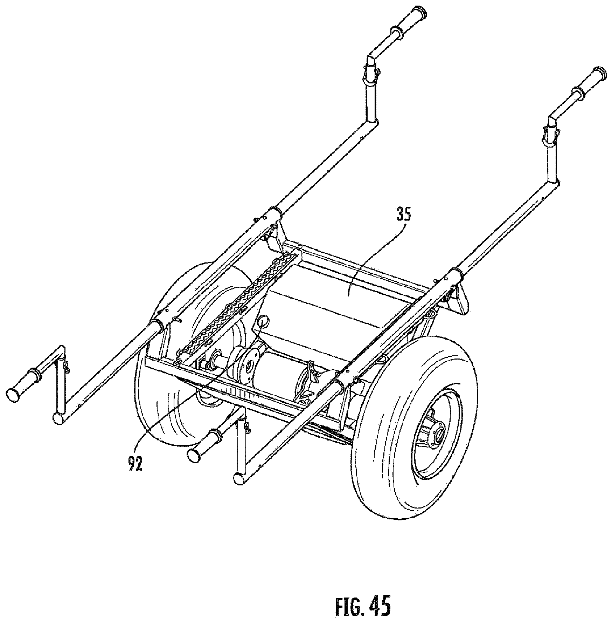

Figure 43 is a view of an electrical enclosure of the tactical transport cart according to the present invention. Figure 43 illustrates a different style of battery than shown in Figure 41. Figure 43 shows battery 90, along with other electrical components. Figure 44 is another view of the electrical enclosure of Figure 41 and also illustrates a port 92 serving as a connection and mainline into the electrical system of the cart and all other electrical features. Port 92 is where external chargers, external devices, and auxiliary power are connected. Non-limiting examples of external devices are other carts, computers, filtration devices, communication equipment, weapons systems, and optics systems. Figure 45 is a perspective view of the cart with the port on common housing 35 of the cart. The port is operatively connected to powertrain 16.

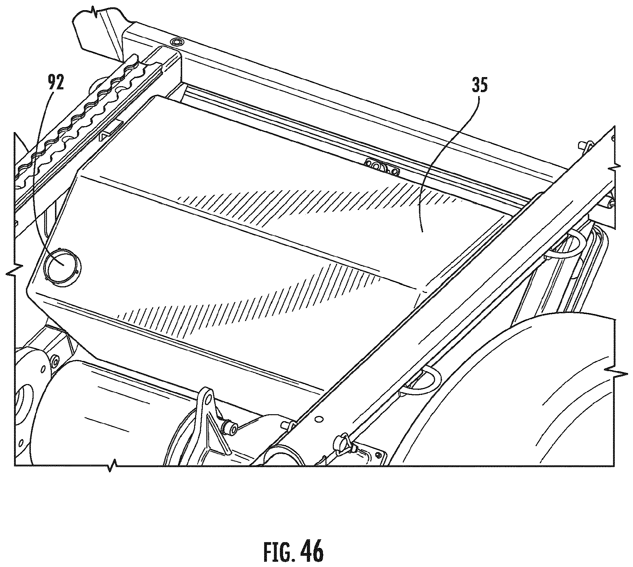

Figure 46 is a close-up view of port 92. Port 92 serves as a mainline into a power system of the cart in which power is imported through, exported through, systems are connected, remote, and robotic or wireless control applications are connected.

With the features of modularity, configuration options, and the employment of diverse electrical components and power systems, the cart can be modified in such a manner to accommodate robotic or autonomous systems. Thus, the cart of the present invention is operated with or without a person. This is accomplished by use of wireless or wired operation of the cart, cart teaming, or other methods of control in which conventional operation is not required. The port can be used to connect a receiving device that receives a wireless signal from a remote control or other control device. Thus, the port can be used for signals as well as for power.

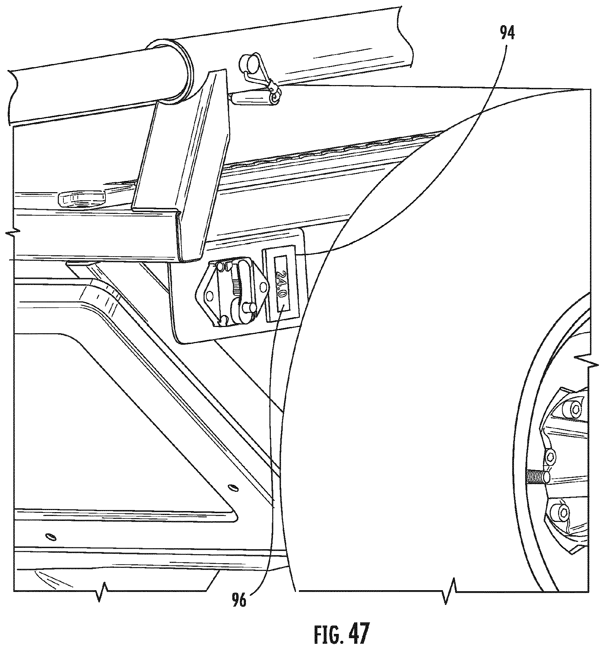

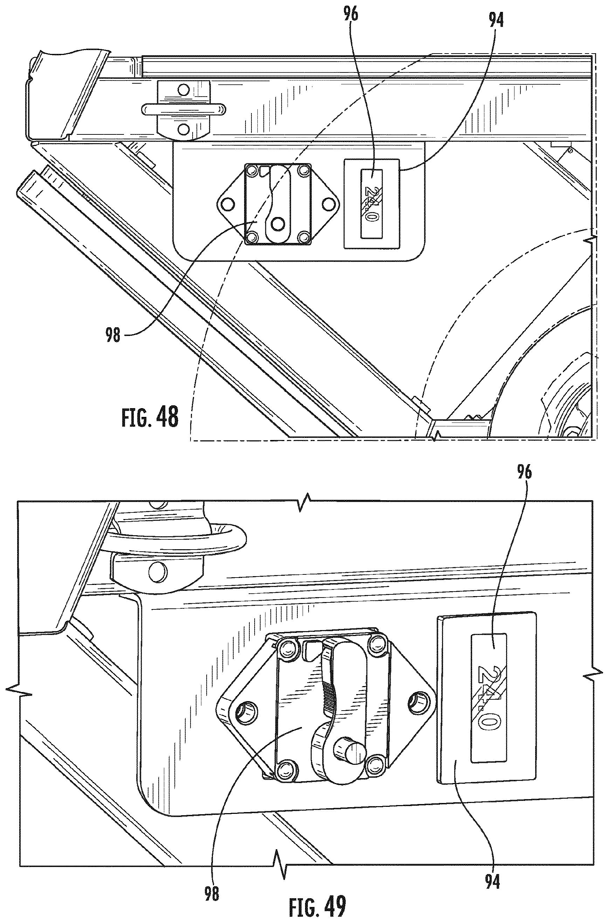

Figure 47 illustrates the tactical transport cart having a gauge 94 in which is provided a digital display visual indicator 96 on the cart body such as for indication of a state of power or a state of charge as it pertains to the primary power supply of the cart. Gauge 94 acts to signify the user as to when to charge or to replace the primary power supply and/or power the cart via an auxiliary power pack or supply. An operator of the cart is able to view visual indicator 96 as needed. Figures 48 to 50 illustrate additional views of the gauge and the visual indicator.

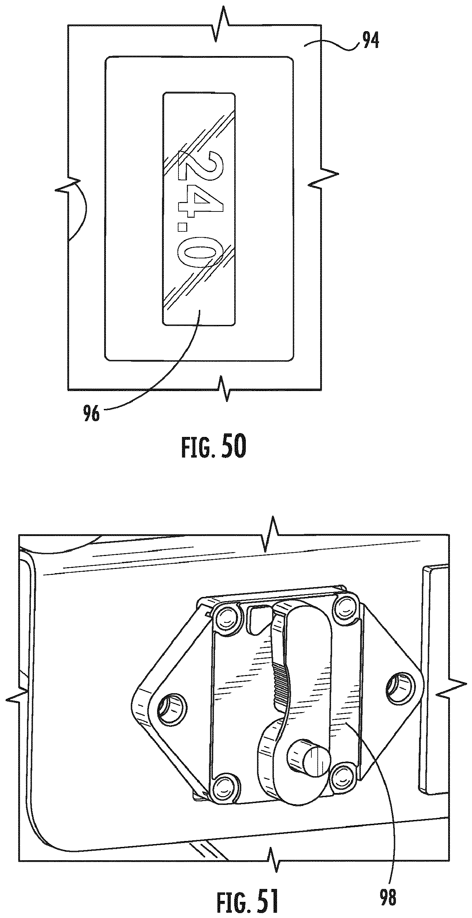

Figure 51 illustrates the tactical transport cart having an on and off power failsafe 98. On and off power failsafe 98 is a circuit breaker also serving the function of an on and off switch for the cart. On and off power failsafe 98 is integral to the powered operation of the cart and accompanying electrical systems. On and off power failsafe 98 dually serves to limit thermal disruption at the power source due to improper use, abnormal electrical load, among other reasons.

An auxiliary power pack 93 can be used to serve as a supplemental power pack and alternative power supply for the cart. Located external of the primary power pack or supply, the auxiliary power pack or supply when utilized can serve the purposes of extending operating range of the cart due to increased energy availability, serving as backup power supply in the event of power failure or depletion of the primary power supply, and charging the primary power supply. The auxiliary power pack can be rapidly inserted into the electrical enclosure that houses the primary power supply, referred to as a swap. The auxiliary power pack can be connected to and power the cart even when there exists no primary power supply within the electrical enclosure. The auxiliary power pack can be used independent of primary function to charge or power other items requiring power not on the cart or payload on the cart that has a power requirement.

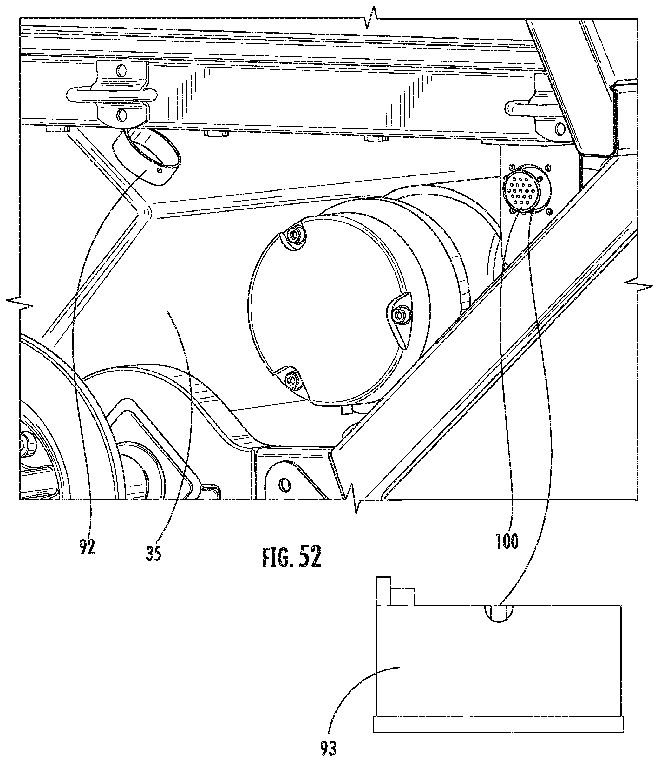

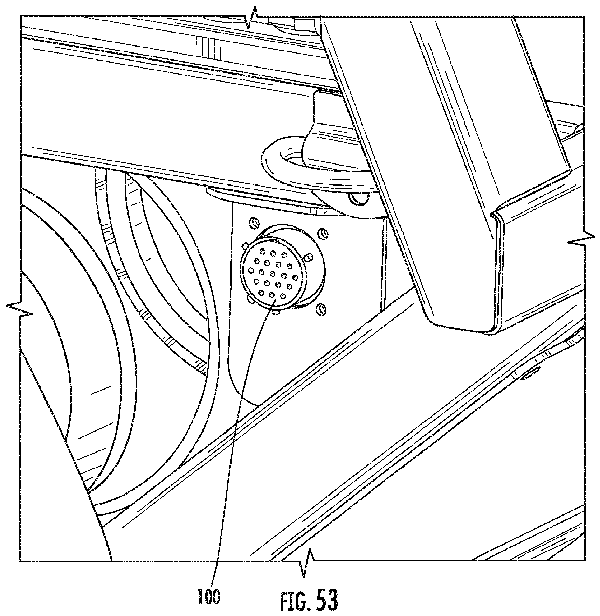

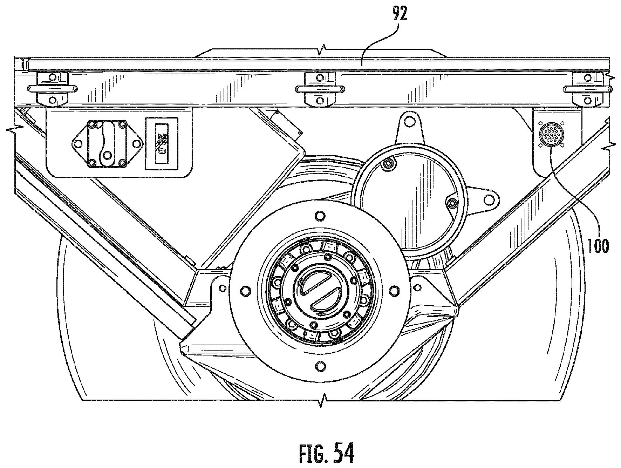

Figures 52 to 54 illustrate alternate views of where the power export, auxiliary power, charging (wireless, remotely, or robotically controlled), and various machine connectivity can all occur. The cart may have one or more ports where such power export, auxiliary power, charging (wireless, remotely, or robotically controlled), and various machine connectivity can all occur. Figure 52 illustrates locations for port 92 and port 100 in which numerous power applications occur. As shown in Figure 52, port 92 is located on common housing 35 and port 100 is affixed to cart body 22. Although two potential port locations are shown in Figure 52, other port locations on the cart body are possible and contemplated within the scope of the present invention. Figure 53 is an enlarged view illustrating port 100. Figure 54 is a side view illustrating ports 92 and 100. The cart and its respective power source whether primary or auxiliary can be utilized for powering or charging of external devices ranging from medical diagnostic equipment, communication tools and other machines or vehicles. This enhancement can be used whether the cart is dynamic or stationary.

By virtue of being towed, downhill motion without motive power, pushed, or similar movement, regenerative braking energizes the battery or other connected devices.

It will therefore be readily understood by those persons skilled in the art that the present invention is susceptible of a broad utility and application. Many embodiments and adaptations of the present invention other than those herein described, as well as many variations, modifications and equivalent arrangements will be apparent from or reasonably suggested by the present invention and the foregoing description thereof, without departing from the substance or scope of the present invention as defined by the appended claims. Accordingly, while the present invention has been described herein in detail in relation to its preferred embodiment, it is to be understood that this disclosure is only illustrative and exemplary of the present invention and is made merely for purposes of providing a full and enabling disclosure of the invention. The foregoing disclosure is not intended or to be construed to limit the present invention or otherwise to exclude any such other embodiment, adaptations, variations, modifications and equivalent arrangements, the present invention being limited only by the claims appended hereto.

## Claims

1. A tactical transport cart (10) configured to be navigable over both ground surfaces of topographic terrains and water-covered surfaces of hydrographic terrains, the transport cart (10) comprising:
a frame (12) having an open structure formed by a pair of laterally spaced-apart longitudinally-extending frame members (20), between which a triangular cart body (22) is centrally affixed and extends downwardly therefrom defining a lower enclosure (24) within the cart body (22), and
a platform (44) affixed to the frame members (20) adjacent the upper side of the cart body (22) defining a payload support on the frame (12),
a pair of terrain-engaging transport propulsion members attached to the frame (12) in laterally spaced relation for supporting the frame (12) at an elevation above surrounding terrain,
a handle structure (18) attached to the frame (12) and extending therefrom in orthogonal relation to the transport propulsion members,
at least one motor (30) connected in driving relation to the transport propulsion members,
a battery (32) for providing motive power to the motor (30),
a control device operatively connected between the battery (32) and the motor (30) for controlling supply of motive power to the motor (30),
the handle structure (18) being configured for steering movement of the frame (12) over surrounding terrain while enabling simultaneous selective access to and operation of the control device,
the frame (12), transport propulsion members and handle structure (18) being cooperatively dimensioned and configured for movement of the cart (10) over ground surfaces of topographic terrains and for partially and fully submerged movement over water-covered surfaces of hydrographic terrains,
the motor (30), the battery (32), the control device and connections therebetween being sealed against water intrusion during submerged operation.

2. The tactical transport cart according to claim 1 , further comprising
a hard point of attachment or connection on the frame (12) or the payload support.

3. The tactical transport cart according to claim 1 or 2, further comprising a ballistic shield (62) or ballistic protection device.

4. The tactical transport cart according to claim 1 or 2, wherein the payload support is elevatable.

5. The tactical transport cart according to claim 1 or 2, wherein the payload support is a platform (44) or a cloth.

6. The tactical transport cart according to claim 1 or 2, wherein the handle structure (18) is rotatable.

7. The tactical transport cart according to claim 1 or 2, wherein the handle structure (18) telescopes, swings, or extends.

8. The tactical transport cart according to claim 1 or 2, wherein the tactical transport cart (10) further comprises a stabilizing prop or support leg (76) attached to the frame (12).

9. The tactical transport cart according to claim 1 or 2, wherein the tactical transport cart (10) further comprises a manually selectable hub on a wheel of the tactical transport cart (10).

10. The tactical transport cart according to claim 1 or 2, wherein the tactical transport cart (10) is collapsible into a case (82).

11. The tactical transport cart according to claim 1 or 2, wherein the tactical transport cart (10) further comprises a sealed electrical enclosure (86).

12. The tactical transport cart according to claim 1 or 2, wherein the tactical transport cart (10) further comprises a port operatively connected to a powertrain of the tactical transport cart.

13. The tactical transport cart according to claim 12, wherein the port (92) is configured for power export.

14. The tactical transport cart according to claim 12, wherein the port (92) is configured for transmission or receipt of a signal.

15. The tactical transport cart according to claim 12, wherein the tactical transport cart comprises an on and off power failsafe (98).

16. The tactical transport cart according to claim 1 or 2, wherein the tactical transport cart is operable from a wireless remote or a wireless signal or communication.

17. The tactical transport cart according to any one of claims 1 to 16, wherein the at least one motor (30) is mounted within a lowermost region of the lower enclosure (24).

18. The tactical transport cart according to claim 17, further comprising a hard point of attachment or connection to the frame or payload support.

19. The tactical transport cart according to claim 18, wherein the hard point of attachment or connection is a logistics track.

## Patentansprüche

1. Taktischer Transportwagen (10), der so konfiguriert ist, dass er sowohl über Bodenoberflächen topographischer Gelände als auch über wasserbedeckte Oberflächen hydrographischer Gelände navigierbar ist, wobei der Transportwagen (10) Folgendes umfasst:
einen Rahmen (12) mit einer offenen Struktur, die von einem Paar seitlich beabstandeter, sich in Längsrichtung erstreckender Rahmenelemente (20) gebildet wird, zwischen denen ein dreieckiger Wagenkörper (22) mittig befestigt ist und sich von dort aus nach unten erstreckt und somit innerhalb des Wagenkörpers (22) eine untere Umfassung (24) bildet, und
eine Plattform (44), die zu den Rahmenelementen (20) benachbart an die Oberseite des Wagenkörpers (22) befestigt ist und auf dem Rahmen (12) einen Nutzlastträger bildet,
ein Paar von in das Gelände eingreifenden Transportantriebselementen, die an dem Rahmen (12) in seitlich beabstandeter Relation angebracht sind, um den Rahmen (12) in einer Höhe über dem umgebenden Gelände zu tragen,
eine Griffstruktur (18), die an dem Rahmen (12) befestigt ist und sich von diesem in orthogonaler Relation zu den Transportantriebselementen erstreckt,
mindestens einen Motor (30), der mit den Transportantriebselementen in Antriebsbeziehung steht,
eine Batterie (32) zum Versorgen des Motors (30) mit Antriebsenergie,
eine Steuervorrichtung, die zwischen der Batterie (32) und dem Motor (30) wirkverbunden ist, um die Versorgung des Motors (30) mit Antriebsenergie zu steuern,
wobei die Griffstruktur (18) dafür konfiguriert ist, die Bewegung des Rahmens (12) über das umgebende Gelände zu lenken und gleichzeitig den selektiven Zugriff auf die Steuervorrichtung und deren Bedienung zu ermöglichen,
wobei der Rahmen (12), die Transportantriebselemente und die Griffstruktur (18) zusammenwirkend für die Bewegung des Wagens (10) über Bodenoberflächen topographischer Gelände und für die teilweise und vollständig untergetauchte Bewegung über wasserbedeckte Oberflächen hydrographischer Gelände dimensioniert und konfiguriert sind,
wobei der Motor (30), die Batterie (32), die Steuervorrichtung und die Verbindungen dazwischen gegen das Eindringen von Wasser während des Unterwasserbetriebs abgedichtet sind.

2. Taktischer Transportwagen nach Anspruch 1, ferner umfassend
einen festen Befestigungs- oder Verbindungspunkt am Rahmen (12) oder am Nutzlastträger.

3. Taktischer Transportwagen nach Anspruch 1 oder 2, ferner umfassend einen ballistischen Schild (62) oder eine ballistische Schutzvorrichtung.

4. Taktischer Transportwagen nach Anspruch 1 oder 2, wobei der Nutzlastträger anhebbar ist.

5. Taktischer Transportwagen nach Anspruch 1 oder 2, wobei der Nutzlastträger eine Plattform (44) oder ein Tuch ist.

6. Taktischer Transportwagen nach Anspruch 1 oder 2, wobei die Griffstruktur (18) drehbar ist.

7. Taktischer Transportwagen nach Anspruch 1 oder 2, wobei die Griffstruktur (18) teleskopierbar, schwenkbar oder ausziehbar ist.

8. Taktischer Transportwagen nach Anspruch 1 oder 2, wobei der taktische Transportwagen (10) ferner eine stabilisierende Stütze oder ein Stützbein (76) umfasst, die bzw. das an dem Rahmen (12) befestigt ist.

9. Taktischer Transportwagen nach Anspruch 1 oder 2, wobei der taktische Transportwagen (10) ferner eine manuell auswählbare Nabe an einem Rad des taktischen Transportwagens (10) umfasst.

10. Taktischer Transportwagen nach Anspruch 1 oder 2, wobei der taktische Transportwagen (10) in einen Koffer (82) zusammenklappbar ist.

11. Taktischer Transportwagen nach Anspruch 1 oder 2, wobei der taktische Transportwagen (10) ferner ein abgedichtetes elektrisches Gehäuse (86) umfasst.

12. Taktischer Transportwagen nach Anspruch 1 oder 2, wobei der taktische Transportwagen (10) ferner einen Anschluss umfasst, der mit einem Antriebsstrang des taktischen Transportwagens wirkverbunden ist.

13. Taktischer Transportwagen nach Anspruch 12, wobei der Anschluss (92) für den Energieexport konfiguriert ist.

14. Taktischer Transportwagen nach Anspruch 12, wobei der Anschluss (92) zum Senden oder Empfangen eines Signals konfiguriert ist.

15. Taktischer Transportwagen nach Anspruch 12, wobei der taktische Transportwagen eine Ein- und Ausschaltausfallsicherung der Stromversorgung (98) umfasst.

16. Taktischer Transportwagen nach Anspruch 1 oder 2, wobei der taktische Transportwagen über eine drahtlose Fernbedienung oder ein drahtloses Signal oder eine drahtlose Kommunikation bedienbar ist.

17. Taktischer Transportwagen nach einem der Ansprüche 1 bis 16, wobei der mindestens eine Motor (30) in einem untersten Bereich der unteren Umfassung (24) angebracht ist.

18. Taktischer Transportwagen nach Anspruch 17, ferner umfassend einen festen Befestigungs- oder Verbindungspunkt an dem Rahmen oder dem Nutzlastträger.

19. Taktischer Transportwagen nach Anspruch 18, wobei der feste Befestigungs- oder Verbindungspunkt eine Logistikschiene ist.

## Revendications

1. Chariot de transport tactique (10) configuré pour pouvoir se déplacer aussi bien sur des surfaces terrestres de terrains topographiques que sur des surfaces immergées de terrains hydrographiques, le chariot de transport (10) comprenant :
un cadre (12) ayant une structure ouverte formée par une paire d'éléments de cadre espacés latéralement et s'étendant longitudinalement (20), entre lesquels un corps de chariot triangulaire (22) est fixé en position centrale et s'étend vers le bas à partir de ceux-ci en définissant une enceinte inférieure (24) à l'intérieur du corps de chariot (22), et
une plateforme (44) fixée aux éléments de cadre (20) à proximité adjacente du côté supérieur du corps de chariot (22) en définissant un support de charge utile sur le cadre (12),
une paire d'éléments de propulsion de transport par contact avec le terrain fixés au cadre (12) selon une relation espacée latéralement pour supporter le cadre (12) à une hauteur au-dessus du terrain environnant,
une structure de poignées (18) attachée au cadre (12) et s'étendant à partir de celui-ci selon une relation orthogonale par rapport aux éléments de propulsion de transport,
au moins un moteur (30) connecté en relation d'entraînement aux éléments de propulsion de transport,
une batterie (32) pour fournir une puissance motrice au moteur (30),
un dispositif de commande connecté de manière fonctionnelle entre la batterie (32) et le moteur (30) pour commander la fourniture de puissance motrice au moteur (30),
la structure de poignées (18) étant configurée pour diriger le déplacement du cadre (12) sur un terrain environnant tout en permettant simultanément un accès sélectif au dispositif de commande et son utilisation,
le cadre (12), les éléments de propulsion de transport et la structure de poignées (18) étant dimensionnés de façon coopérante et configurés pour permettre un déplacement du chariot (10) sur des surfaces terrestres de terrains topographiques et un déplacement en submersion partielle ou totale sur des surfaces immergées de terrains hydrographiques,
le moteur (30), la batterie (32), le dispositif de commande et les raccordements entre eux étant étanches à toute infiltration d'eau pendant une utilisation en submersion.

2. Chariot de transport tactique selon la revendication 1, comprenant en outre
un point renforcé de fixation ou de liaison sur le cadre (12) ou sur le support de charge utile.

3. Chariot de transport tactique selon la revendication 1 ou 2, comprenant en outre un bouclier balistique (62) ou un dispositif de protection balistique.

4. Chariot de transport tactique selon la revendication 1 ou 2, dans lequel le support de charge utile est élevable.

5. Chariot de transport tactique selon la revendication 1 ou 2, dans lequel le support de charge utile est une plateforme (44) ou une toile.

6. Chariot de transport tactique selon la revendication 1 ou 2, dans lequel la structure de poignées (18) peut être retournée.

7. Chariot de transport tactique selon la revendication 1 ou 2, dans lequel la structure de poignées (18) est télescopique, peut pivoter ou s'étendre.

8. Chariot de transport tactique selon la revendication 1 ou 2, dans lequel le chariot de transport tactique (10) comprend en outre une béquille de stabilisation ou une jambe d'appui (76) attachée au cadre (12).

9. Chariot de transport tactique selon la revendication 1 ou 2, dans lequel le chariot de transport tactique (10) comprend en outre un moyeu sélectionnable manuellement sur une roue du chariot de transport tactique (10).

10. Chariot de transport tactique selon la revendication 1 ou 2, dans lequel le chariot de transport tactique (10) peut être replié dans un coffre (82).

11. Chariot de transport tactique selon la revendication 1 ou 2, dans lequel le chariot de transport tactique (10) comprend en outre un boîtier électrique étanche (86).

12. Chariot de transport tactique selon la revendication 1 ou 2, dans lequel le chariot de transport tactique (10) comprend en outre un connecteur relié de manière fonctionnelle à un groupe motopropulseur du chariot de transport tactique.

13. Chariot de transport tactique selon la revendication 12, dans lequel le connecteur (92) est configuré pour permettre l'exportation de puissance.

14. Chariot de transport tactique selon la revendication 12, dans lequel le connecteur (92) est configuré pour la transmission ou la réception d'un signal.

15. Chariot de transport tactique selon la revendication 12, dans lequel le chariot de transport tactique comprend un dispositif à sécurité intrinsèque de mise sous tension et hors tension (98).

16. Chariot de transport tactique selon la revendication 1 ou 2, dans lequel le chariot de transport tactique peut être commandé à partir d'une télécommande sans fil ou par un signal ou une communication sans fil.

17. Chariot de transport tactique selon l'une quelconque des revendications 1 à 16, dans lequel l'au moins un moteur (30) est monté dans une région la plus basse de l'enceinte inférieure (24).

18. Chariot de transport tactique selon la revendication 17, comprenant en outre un point renforcé de fixation ou de liaison au cadre ou au support de charge utile.

19. Chariot de transport tactique selon la revendication 18, dans lequel le point renforcé de fixation ou de liaison est un rail logistique.
